# EUROPEAN PATENT APPLICATION

(11) **EP 2 608 601 A1**
(43) Date of publication of application: **26.06.2013**
(21) Application number: 11818013.2
(22) Date of filing: 14.07.2011
(51) Int. Cl.: H04W 36/14, H04W 84/10, H04W 92/22

(54) **COMMUNICATION SYSTEM, GATEWAY APPARATUS, FEMTOCELL BASE STATION, COMMUNICATION METHOD AND APPARATUS PROGRAM**

(30) Priority: 16.08.2010 JP 2010181903
(71) Applicant: NEC Corporation, Tokyo 108-8001 (JP)
(72) Inventor: MIYAGAWA, Yusuke, Tokyo 108-8001 (JP); WATANABE, Yasuhiro, Tokyo 108-0073 (JP); KIDO, Takayuki, Tokyo 108-8001 (JP); AKIMOTO, Takuo, Tokyo 108-8001 (JP); KUROKAWA, Osamu, Tokyo 108-8001 (JP)
(74) Representative: Betten & Resch
(86) International application number: PCT/JP2011/066118
(87) International publication number: WO 2012/023369

(57) **Abstract**

In order to realize hand over between an existing communication network and an FAP in a communication system with a different communication procedure, without requiring improvement of an existing communication system, a gateway device and the Femto Access Point configure virtual RNC means which is recognized as an RNC by an RNC when communication with the RNC is performed, and if the hand over is performed between a BTS and the Femto Access Point, the virtual RNC means transmits and receives a message containing hand over information for call control to and from the RNC.

## Description

### Technical Field

The present invention relates to a communication system, a gateway device, a Femto Access Point, a communication method and a device program which realize hand over between communication systems with different communication procedures.

### Background Art

In a 3G (third generation: third generation mobile communication) network which is an existing public mobile communication network which performs a call connection for user equipment (UE) such as a cellular telephone, generally, even if a Base Transceiver Station (BTS) to which the UE belongs is changed due to movement of the UE, a telephone call can be continued by hand over.

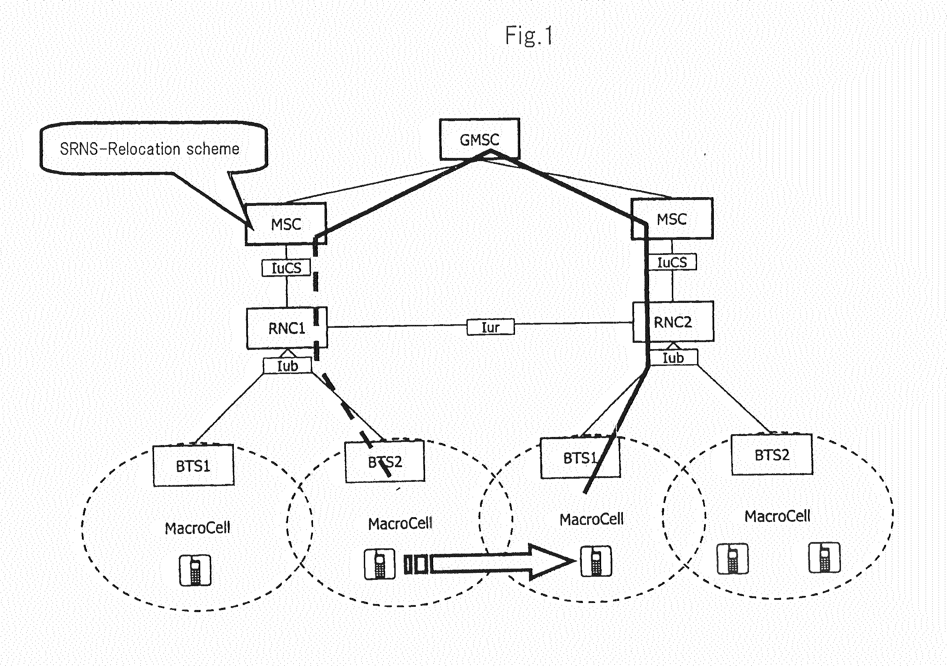

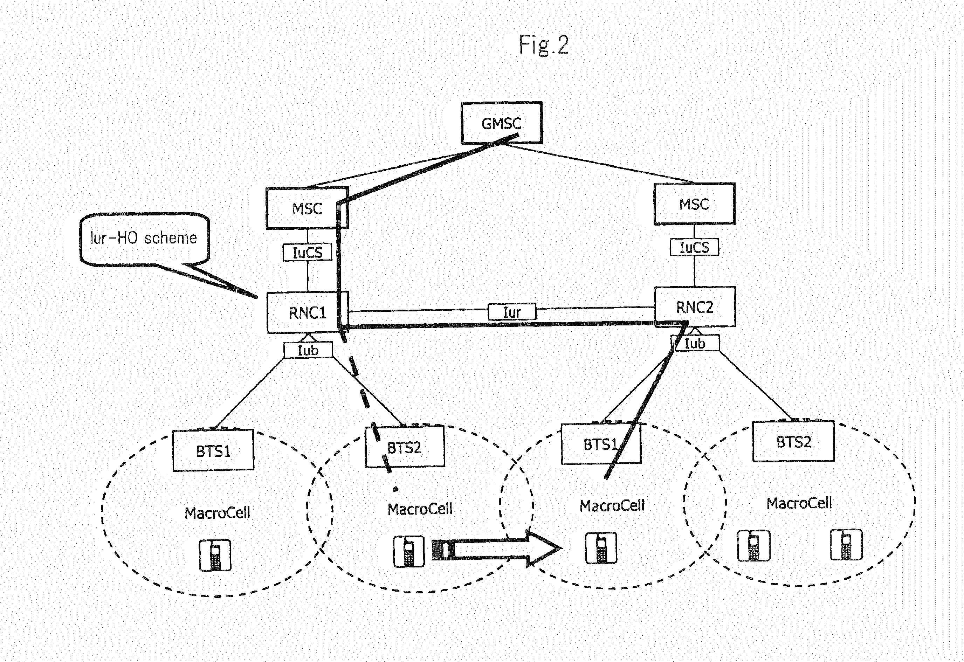

As the hand over in the existing 3G network, for example, an SRNS (Serving Radio Network Subsystem)-Relocation scheme as shown in Figure 1 and an Iur-HO (hand over) scheme as shown in Figure 2 have been known. The Iur indicates a logical interface between RNCs (Radio Network Controllers).

In the SRNS-Relocation scheme of Figure 1, an MSC (Mobile Switching Center; core device) is used as an anchor node, a source MSC transmits and receives various messages (hand over information) required for the hand over, to and from an MSC of a hand over destination, via a GMSC (Gateway-MSC), and the call connection for the UE is performed under the BTS of the hand over destination.

In the Iur-HO scheme of Figure 2, the RNC is used as the anchor node, and the hand over information for call control is transmitted and received between a source RNC and an RNC of the hand over destination. In other words, the transmission and the reception of the message of the hand over information higher than a physical layer are performed without involving the MSC, and the call connection for the UE is performed under the BTS of the hand over destination.

Moreover, in recent years, possibilities of a femto cell which connects the UE to a mobile communication core network via a wired line with an IMS (IP Multimedia Subsystem) network installed at home or in an office or the like have drawn attention.
This femto cell wirelessly connects the UE by means of a Femto Access Point (FAP) covering a small communication area with a radius of approximately several tens of meters, and mainly covers an interior communication area such as at home or in an office. Thereby, the communication area can be covered at no cost for infrastructure development for an existing macro cell base station.

There is known a technique in which the hand over is executed between an AP (Access Point) of the IMS network, such as the FAP as described above, and the BTS of the existing 3G network, according to the above described SRNS-Relocation scheme of Figure 1 (for example, see Patent Literature 1).

Moreover, there is a technique in which, for the purpose of the hand over between a base station of a macro network (the existing 3G network) and the Femto Access Point, in actions of the Femto Access Point, an action in a time period without communication with the UE is monitored, a candidate mobile station is identified based on the monitoring, and an identifier of the candidate mobile station is transmitted from the Femto Access Point to the base station of the macro network (for example, see Patent Literature 2).

### Citation List

### Patent Document

Patent Document 1: JP2009-504049A
Patent Document 2: JP2009-303223A

### Summary of Invention

### Problem to be solved by the invention

However, in the above described general existing 3G network, a configuration for connecting to the femto cell which performs the call control in the IMS network has not been considered.

Moreover, in the technique described in the above described Patent Literature 1, the anchor node used when the hand over is performed from the BTS of the existing 3G network to the FAP is the MSC. Consequently, in order to connect the IMS network including the FAP to the existing 3G network, a function for dealing with the hand over with the FAP which performs the call control in the IMS network may be required to be added to the MSC.

Moreover, the technique described in the above described Patent Literature 2 just identifies the base station which becomes a candidate for the hand over destination and transmits the identifier of the base station. In other words, the technique described in the above described Patent Literature 2 has not considered realization of transmission and reception of control information when the call control for the telephone call performed by the UE is performed.
Consequently, both the technique described in Patent Literature 1 and the technique described in Patent Literature 2 have not considered the hand over between communication systems with different communication procedures, such as between the FAP of the communication system, which performs the call control in the IMS network, and the BTS of the existing 3G network, which performs the call control with the MSC.

The present invention has been made in view of the above described status, and it is an object of the present invention to provide a communication system, a gateway device, a Femto Access Point, a communication method and a device program which can realize the hand over between the existing mobile communication network and the FAP in the communication system with a communication procedure different from that of the existing mobile communication network, without requiring improvement of each device in the existing mobile communication network such as the existing 3G network.

### Means that solve the problem

In order to achieve the above object, a communication system according to the present invention is a communication system which is connected to another communication system with a different communication procedure and which is used, wherein
the other communication system includes an RNC and a BTS;
the communication system includes a gateway device and a Femto Access Point;
the gateway device and the Femto Access Point configure virtual RNC means which is recognized as an RNC by the RNC when communication with the RNC is performed; and
if hand over is performed between the BTS and the Femto Access Point, the virtual RNC means transmits and receives a message containing hand over information for call control to and from the RNC.

Moreover, a gateway device according to the present invention is a gateway device in a communication system which is connected to another communication system with a different communication procedure and which is used, wherein
the other communication system includes an RNC and a BTS;
the communication system includes the gateway device and a Femto Access Point;
the gateway device includes control means which configures virtual RNC means together with the Femto Access Point, the virtual RNC means being recognized as an RNC by the RNC when communication with the RNC is performed; and
if hand over is performed between the BTS and the Femto Access Point, the virtual RNC means transmits and receives a message containing hand over information for call control to and from the RNC.

Moreover, a Femto Access Point according to the present invention is a Femto Access Point in a communication system which is connected to another communication system with a different communication procedure and which is used, wherein
the other communication system includes an RNC and a BTS;
the communication system includes a gateway device and the Femto Access Point;
the Femto Access Point includes control means which configures virtual RNC means together with the gateway device, the virtual RNC means being recognized as an RNC by the RNC when communication with the RNC is performed; and
if hand over is performed between the BTS and the Femto Access Point, the virtual RNC means transmits and receives a message containing hand over information for call control to and from the RNC.

Moreover, a communication method according to the present invention is a communication method between a communication system and another communication system with a different communication procedure, wherein
the other communication system includes an RNC and a BTS;
the communication system includes a gateway device and a Femto Access Point;
the gateway device and the Femto Access Point configure virtual RNC means which is recognized as an RNC by the RNC when communication with the RNC is performed; and
if hand over is performed between the BTS and the Femto Access Point, the virtual RNC means transmits and receives a message containing hand over information for call control to and from the RNC, and a line connection to a hand over destination is established.

Moreover, a program for a gateway device according to the present invention is a program for a gateway device in a communication system which is connected to another communication system with a different communication procedure and which is used, wherein
the other communication system includes an RNC and a BTS;
the communication system includes the gateway device and a Femto Access Point;
the gateway device is caused to configure virtual RNC means together with the Femto Access Point, the virtual RNC means being recognized as an RNC by the RNC when communication with the RNC is performed; and
if hand over is performed between the BTS and the Femto Access Point, a procedure in which the virtual RNC means transmits and receives a message containing hand over information for call control to and from the RNC is caused to be executed.

Moreover, a program for a Femto Access Point according to the present invention is a program for a Femto Access Point in a communication system which is connected to another communication system with a different communication procedure and which is used, wherein
the other communication system includes an RNC and a BTS;
the communication system includes a gateway device and the Femto Access Point;
the Femto Access Point is caused to configure virtual RNC means together with the gateway device, the virtual RNC means being recognized as an RNC by the RNC when communication with the RNC is performed; and
if hand over is performed between the BTS and the Femto Access Point, the Femto Access Point as the virtual RNC means is caused to execute a procedure for transmitting and receiving a message containing hand over information for call control to and from the RNC.

### Effect of Invention

As described above, according to the present invention, the hand over can be realized between the existing mobile communication network and the FAP in the communication system with the communication procedure different from that of the existing mobile communication network, without requiring the improvement of each device in the existing mobile communication network.

### Brief Description of Drawings

[Figure 1] Figure 1 is a diagram showing an example of hand over according to an SRNS-Relocation scheme in an existing 3G network.
[Figure 2] Figure 2 is a diagram showing an example of the hand over according to an Iur-HO scheme in the existing 3G network.
[Figure 3] Figure 3 is a diagram schematically showing the hand over performed by virtual RNC means of an exemplary embodiment.
[Figure 4] Figure 4 is a block diagram showing an example of a configuration of a communication system of the present exemplary embodiment.
[Figure 5] Figure 5 is a block diagram showing an example of a configuration around a gateway device and a RAN of the present exemplary embodiment.
[Figure 6] Figure 6 is a diagram showing an example of protocols between respective devices in the present exemplary embodiment.
[Figure 7] Figure 7 is a diagram showing an example of protocol conversion in the hand over.
[Figure 8] Figure 8 is a sequence diagram showing the hand over between macro cells in the existing 3G network.
[Figure 9] Figure 9 is a sequence diagram showing successive hand over among the macro cells in the existing 3G network.
[Figure 10] Figure 10 is a sequence diagram showing the successive hand over among the macro cells in the existing 3G network.
[Figure 11] Figure 11 is a sequence diagram showing the hand over from the macro cell to a femto cell.
[Figure 12] Figure 12 is a sequence diagram showing the hand over from the femto cell to the macro cell.
[Figure 13] Figure 13 is a sequence diagram showing the successive hand over from the macro cell to the femto cell, and further to another femto cell.
[Figure 14] Figure 14 is a sequence diagram showing the successive hand over from the macro cell to the femto cell, and further to another femto cell.
[Figure 15] Figure 15 is a diagram showing a successive hand over operation as shown in Figures 13 and 14, in comparison with the existing 3G network.
[Figure 16] Figure 16 is a diagram showing another example of the successive hand over operation according to the present exemplary embodiment.
[Figure 17] Figure 17 is a sequence diagram showing the successive hand over from the femto cell to the macro cell, and further to another macro cell.
[Figure 18] Figure 18 is a sequence diagram showing the successive hand over from the femto cell to the macro cell, and further to another macro cell.
[Figure 19] Figure 19 is a sequence diagram showing the successive hand over from the femto cell to the macro cell, and further to another macro cell.
[Figure 20] Figure 20 is a diagram showing another example of the successive hand over operation according to the present exemplary embodiment.
[Figure 21A] Figure 21A is a diagram showing an example of a hand over operation in a case where line connections to FAPs or BTSs are simultaneously performed.
[Figure 21B] Figure 21B is a diagram showing an example of the hand over operation in the case where the line connections to the FAPs or the BTSs are simultaneously performed.
[Figure 21C] Figure 21C is a diagram showing an example of the hand over operation in the case where the line connections to the FAPs or the BTSs are simultaneously performed.

### Modes that carry out the invention

Next, an exemplary embodiment in which a communication system, a gateway device, a Femto Access Point, a communication method and a device program according to the present invention are applied, will be described in detail using the drawings.

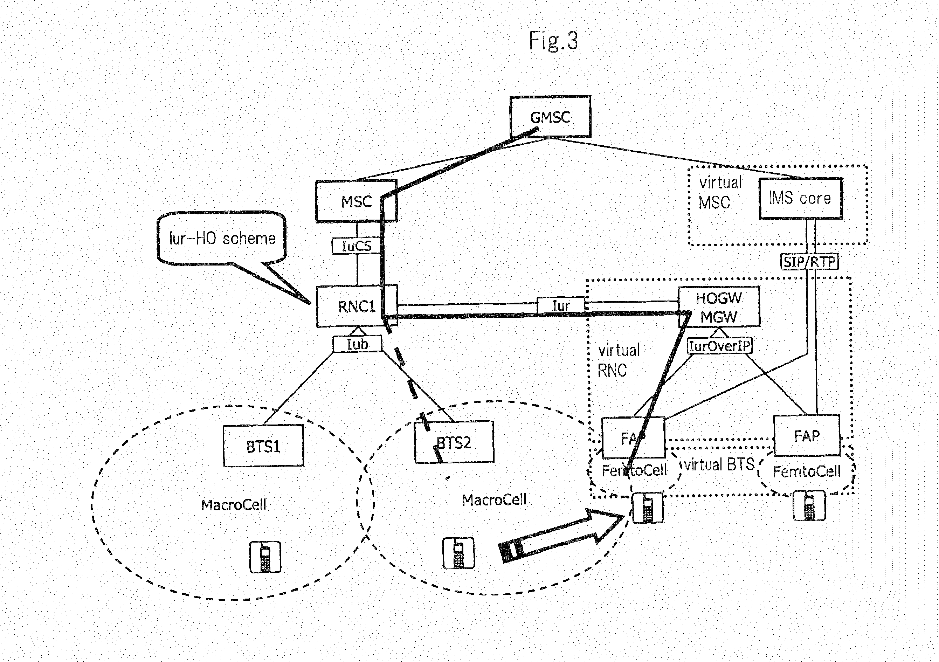

First, an outline of the present exemplary embodiment will be described.
In the present exemplary embodiment, as shown in Figure 3, the FAP performs a call connection for UE which is user equipment, and a gateway device including an HOGW (Hand Over Gateway) and an MGW (Media Gateway), as well as the FAP perform transmission and reception to and from an RNC of the other party of communication, in a manner similar to an RNC.

Thereby, the gateway device and the FAP configure virtual RNC means, and the FAP functions as a virtual BTS to accommodate the UE via wireless communication. Consequently, also if hand over is performed between a BTS of an existing 3G network and the FAP of an IMS network, each device in the existing 3G network can perform a hand over process with an operation similar to an Iur-HO scheme for the existing 3G network as described above in Figure 2.
Consequently, according to the present exemplary embodiment, within a range defined by standards such as 3GPP (3rd Generation Partnership Project), the hand over with the existing network can be realized without requiring any additional change to an existing public mobile communication network.

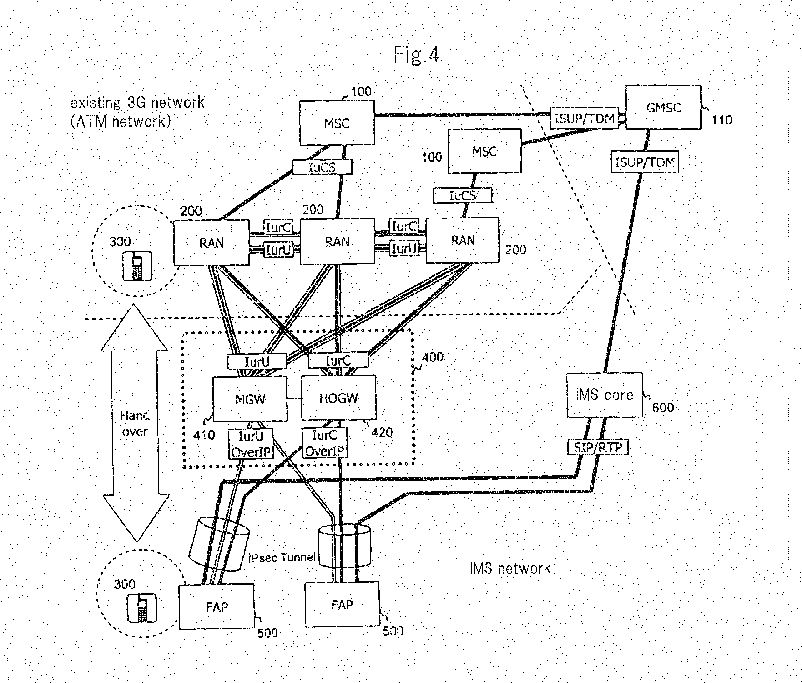

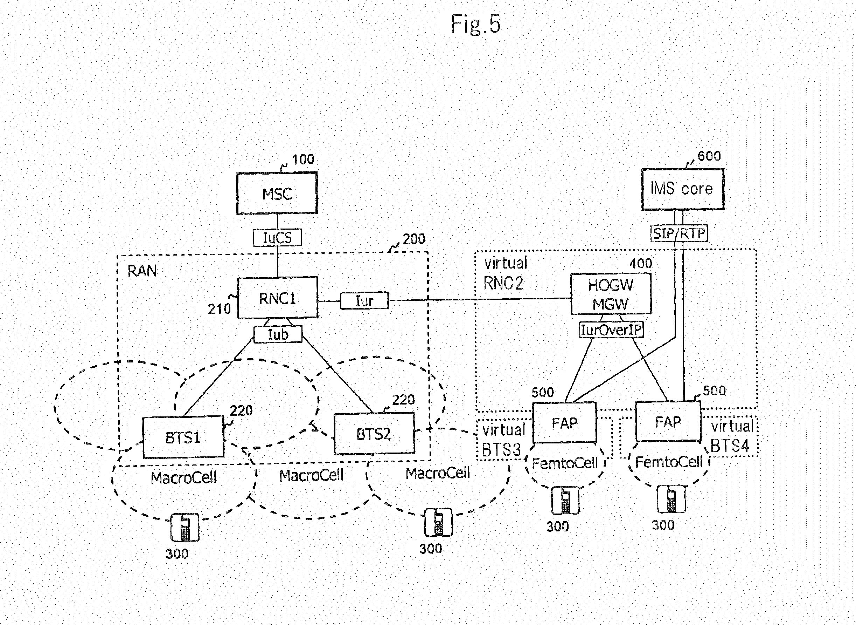

Next, a configuration of the present exemplary embodiment will be described.
An example of a schematic configuration of the communication system of the present exemplary embodiment, and interfaces between the devices are shown in Figures 4 and 5.

The communication system of the present exemplary embodiment has the existing 3G network based on an ATM (Ansynchronous Transfer Mode) and the IMS network based on an IP (Internet Protocol), as shown in Figure 4.

The existing 3G network includes MSC 100, GMSC 110 and RAN (Radio Area Network) 200. RAN 200 includes RNC 210 and BTS 220, and accommodates UE 300 under BTS 220, as shown in Figure 5.

MSC 100, GMSC 110, RNC 210, BTS 220 and UE 300, which are included in the existing 3G network, are devices which perform processes compliant with the standards such as 3GPP. Consequently, specific processing operations of MSC 100, GMSC 110, RNC 210, BTS 220 and UE 300 are omitted. Techniques used in the existing 3G network are disclosed, for example, in 3GPP TS 33.234 and the like. Moreover, the hand over is disclosed in 3GPP TR 25.931 and the like.

The IMS network includes FAP 500 which constructs a predetermined communication area, IMS core 600, and gateway device 400 which realizes the hand over with the existing 3G network.

FAP 500 is a small Base Transceiver Station which covers a small communication area with a radius of approximately several tens of meters.

IMS core 600 is a core network including a Call Session Control Function (CSCF) which performs session control and the like, and a device such as an HSS (Home Subscriber Server) which performs management of subscriber information and the like. UE 300 performs a location registration process for IMS core 600 via FAP 500, and IMS core 600 realizes a function such as call control for each UE existing under FAP 500.

Gateway device 400 includes HOGW 420 in charge of a C-Plane which transfers a control signal, and MGW 410 in charge of a U-Plane which transfers user information such as voice information in a telephone call. Thus, gateway device 400 performs protocol conversion between an ATM network and an IP network, for each of the C-Plane and the U-Plane, and the like.

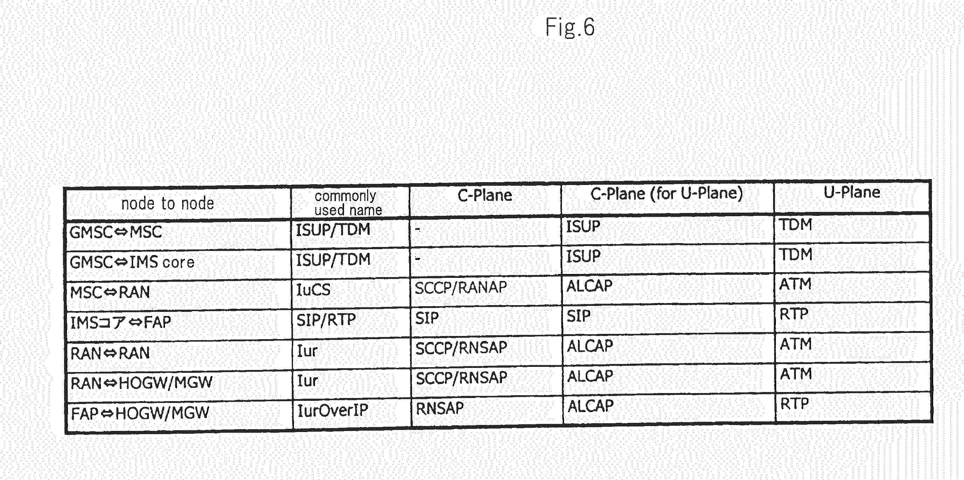

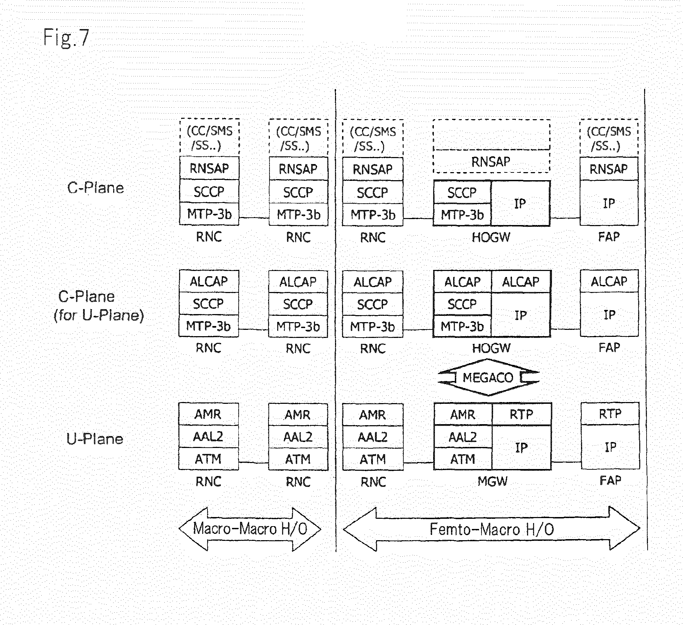

An example of protocols between respective devices, for each of the C-Plane, the C-Plane for establishing the U-Plane (C-Plane for U-Plane), and the U-Plane, in the present exemplary embodiment is shown in Figure 6. The C-Plane for establishing the U-Plane is the C-Plane for signaling for establishing a line connection by the U-Plane.
Moreover, the protocols in the existing 3G network in the hand over, and an example of the protocol conversion performed by gateway device 400 are shown in Figure 7.

As shown in Figures 6 and 7, for each of the C-Plane, the C-Plane for establishing the U-Plane, and the U-Plane, each device in the existing 3G network just needs to perform transmission and reception according to a protocol similar to that for the hand over between macro cells in the existing 3G network, also in the hand over between a macro cell of BTS 220 and a femto cell of the FAP.

In other words, also in communication between RAN 200 and gateway device 400, as shown in Figure 6, RAN 200, that is, RNC 210 performs the communication according to protocols which are completely similar to communication between RANs 200.

Moreover, as shown in Figure 7, if HOGW 420 and MGW 410 receive a signal from RNC 210, HOGW 420 and MGW 410 convert the signal into a predetermined protocol of the IMS network corresponding to a protocol of the signal, and transmit the converted signal as a payload within an IP packet, to FAP 500. In other words, HOGW 420 and MGW 410 transmit the IP packet including the payload indicating the converted signal, to FAP 500.

For example, for the C-Plane, when HOGW 420 receives a signal in accordance with an RNSAP (Radio Network Subsystem Application Part) from RNC 210, since the protocol of the IMS network corresponding to the signal is the RNSAP, HOGW 420 transmits data transmitted according to the RNSAP from RNC 210, as the payload in the IP packet, to FAP 500.

Moreover, for the C-Plane for establishing the U-Plane, when HOGW 420 receives a signal in accordance with an ALCAP (Access Link Control Application Part) from RNC 210, since the protocol of the IMS network corresponding to the signal is the ALCAP, HOGW 420 transmits data transmitted according to the ALCAP from RNC 210, as the payload in the IP packet, to FAP 500.

Moreover, for the U-Plane, when MGW 410 receives a signal in accordance with an AMR (Adaptive Multi-Rate) from RNC 210, since the protocol of the IMS network corresponding to the signal is an RTP (Real Time Transport Protocol), MGW 410 converts data transmitted according to the AMR from RNC 210, into the RTP protocol, and transmits the converted signal as the payload in the IP packet, to FAP 500.

As described above, HOGW 420 and MGW 410 perform the protocol conversion, distribute a frame between the existing 3G network and the IMS network, and realize the hand over between the macro cell of BTS 220 and the femto cell of FAP 500.
Communication between HOGW 420 and MGW 410 is performed according to a MEGACO (Media Gateway Control protocol).

Next, a hand over operation in the communication system of the present exemplary embodiment will be described with reference to sequence diagrams.

In each sequence diagram, an SRNC (Serving RNC) denotes RNC 210 which controls BTS 220 to which UE 300 belongs before movement due to the hand over. A DRNC (Drift RNC) denotes RNC 210 which controls BTS 220 to which UE 300 belongs after the movement due to the hand over.

Moreover, RAN 200 including such RNC 210 and BTS 220 under the control of RNC 210 is denoted as "RNS" (Radio Network Subsystem), the RNS to which UE 300 belongs before the movement due to the hand over is denoted as "SRNS" (Serving RNS), and the RNS to which UE 300 belongs after the movement due to the hand over is denoted as "DRNS" (Drift RNS).
Moreover, for the IMS network, a portion functioning as a virtual RNS is denoted as "RNS".

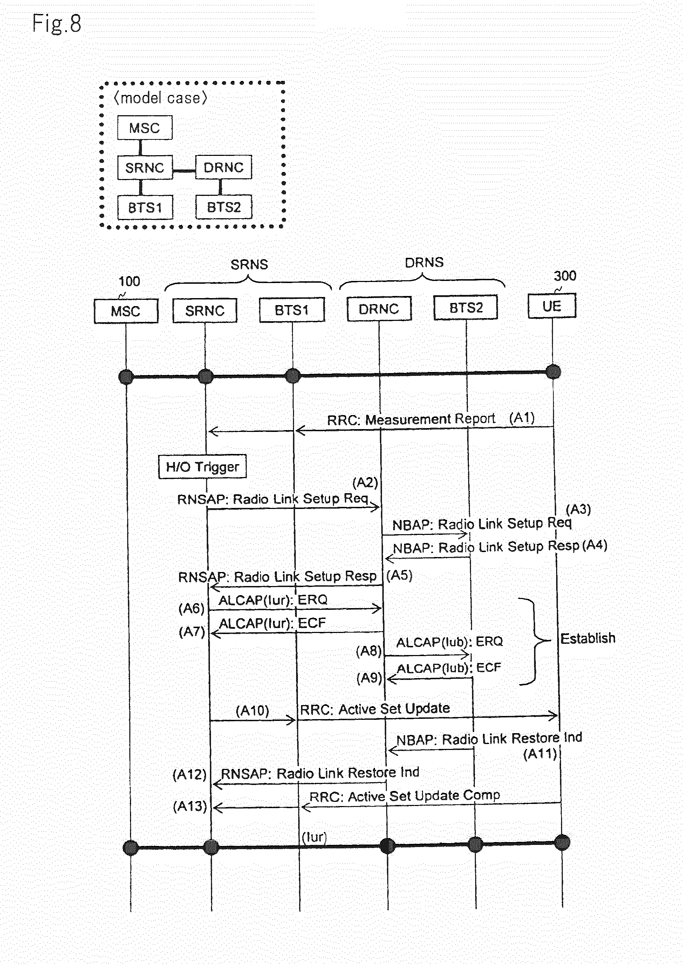

First, the hand over between the macro cells in the existing 3G network will be described with reference to a sequence diagram of Figure 8. This hand over operation is in accordance with provisions of 3GPP TR25.931 and the like.
In the example of Figure 8, a model case will be described in which the BTS to which UE 300 belongs before the movement due to the hand over is denoted as "BTS1", and the BTS to which UE 300 belongs after the movement due to the hand over is denoted as "BTS2".

First, in response to a hand over trigger, such as when the UE that is present under BTS1 senses that a radio wave from BTS2 is stronger than a radio wave from BTS1 by a value equal to or larger than a predetermined value, the UE transmits an RRC: Measurement Report via BTS1 to the SRNC (step A1). In response to reception of the RRC: Measurement Report as the trigger for the hand over, the SRNC routes a connection route from the SRNC to the DRNC, and transmits an RNSAP: Radio Link Setup Req to the DRNC, as a C-Plane connection request (step A2).

When receiving the RNSAP: Radio Link Setup Req, the DRNC transmits the Radio Link Setup Req to BTS2 according to an NBAP (Node B Application Part) and executes a query (step A3). When receiving the NBAP: Radio Link Setup Req, BTS2 returns an NBAP: Radio Link Setup Resp to the DRNC (step A4). The DRNC transmits the Radio Link Setup Resp to the SRNC according to the RNSAP (step A5).

When receiving the RNSAP: Radio Link Setup Resp, the SRNC transmits an ALCAP (Iur): ERQ (Establish Request Message) to the DRNC, as a connection request at the C-Plane for establishing the U-Plane (step A6). When receiving the ALCAP (Iur): ERQ, the DRNC returns an ALCAP (Iur): ECF (Establish Confirm Message) to the SRNC (step A7), and transmits an ALCAP (Iub): ERQ to BTS2 according to an Iub which is a logical interface between the RNC and the BTS (step A8).

When receiving the ALCAP (Iub): ERQ, BTS2 returns an ALCAP (Iub): ECF to the DRNC (step A9).

When receiving the ALCAP (Iur): ECF and confirming the establishment of the connection at the C-Plane for establishing the U-Plane, the SRNC transmits an RRC: Active Set Update via BTS1 to the UE (step A10).

BTS2 transmits an NBAP: Radio Link Restore Ind to the DRNC, as a notification of uplink synchronization (step A11). When receiving the NBAP: Radio Link Restore Ind, the DRNC transmits the Radio Link Restore Ind to the SRNC according to the RNSAP (step A12).

When receiving the RRC: Active Set Update, the UE transmits an RRC: Active Set Up date Comp via BTS1 to the SRNC (step A13). Thus, as a result, the UE is present under BTS2.

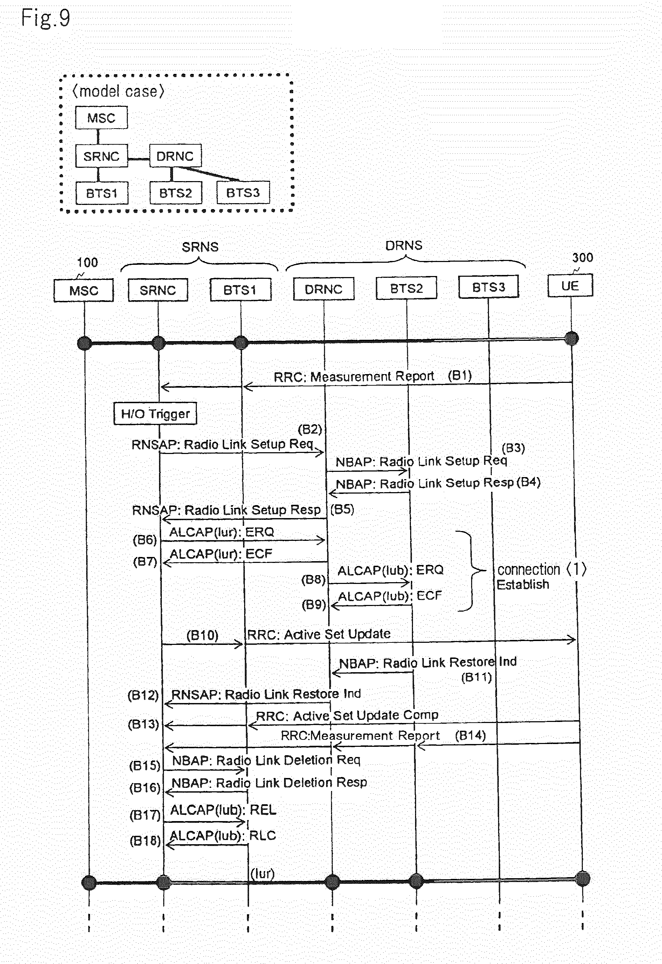

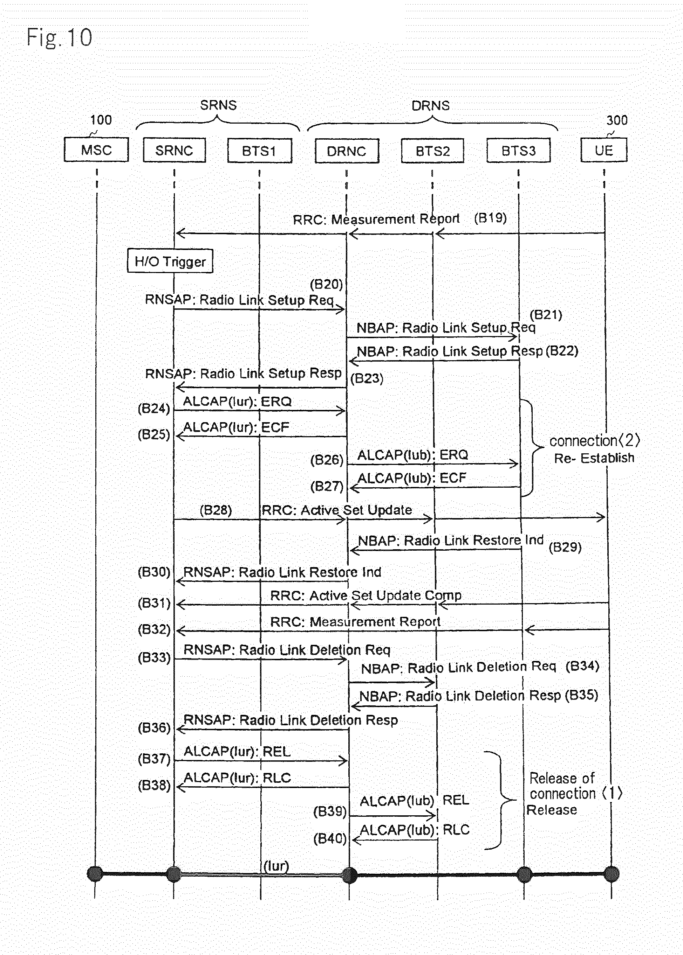

Next, successive hand over among the macro cells in the existing 3G network will be described with reference to sequence diagrams of Figures 9 and 10.
In examples of Figures 9 and 10, a model case will be described in which the BTS to which UE 300 belongs before the movement due to the hand over is denoted as "BTS1", the BTS to which UE 300 belongs after movement due to first hand over is denoted as "BTS2", and the BTS to which UE 300 belongs after movement due to second hand over is denoted as "BTS3".

First, according to operations similar to those in steps A1 to A13 in the above described sequence diagram of Figure 8, the first hand over is performed from BTS1 to BTS2 (steps B1 to B13).

Thus, as a result, when the UE is also present under BTS2, the RRC: Measurement Report for releasing the connection to BTS 1 which has been established before the hand over is transmitted from the UE via BTS2 and the DRNC to the SRNC (step B14). The SRNC transmits a Radio Link Deletion Req to BTS 1 as a C-Plane release request according to the NBAP, and executes a query (step B15). When receiving the NBAP: Radio Link Deletion Req, BTS1 returns an NBAP: Radio Link Deletion Resp to the SRNC (step B16).

When receiving the NBAP: Radio Link Deletion Resp, the SRNC next transmits an ALCAP (Iub): REL (Release Request Message) to BTS1 as a connection release request at the C-Plane for establishing the U-Plane (step B17). When receiving the ALCAP (Iub): REL, BTS1 returns an ALCAP (Iub): RLC (Release Complete Message) to the SRNC (step B18).

Thus, after the connection between the UE and BTS 1 has been released, in response to the hand over trigger, such as when it is sensed that a radio wave from BTS3 is stronger than the radio wave from BTS2 by a value equal to or larger than a predetermined value, the UE transmits the RRC: Measurement Report via BTS2 and the DRNC to the SRNC (step B 19). In response to the reception of the RRC: Measurement Report as the trigger for the hand over, the SRNC routes a connection route due to the hand over, and transmits the RNSAP: Radio Link Setup Req to the DRNC, as the C-Plane connection request (step B20).

When receiving the RNSAP: Radio Link Setup Req, the DRNC transmits the Radio Link Setup Req to BTS3 according to the NBAP, and executes a query (step B21). When receiving the NBAP: Radio Link Setup Req, BTS3 returns the NBAP: Radio Link Setup Resp to the DRNC (step B22). The DRNC transmits the Radio Link Setup Resp to the SRNC according to the RNSAP (step B23).

When receiving the RNSAP: Radio Link Setup Resp, the SRNC transmits the ALCAP (Iur): ERQ to the DRNC, as the connection request at the C-Plane for establishing the U-Plane (step B24). When receiving the ALCAP (Iur): ERQ, the DRNC returns the ALCAP (Iur): ECF to the SRNC (step B25), and transmits the ALCAP (Iub): ERQ to BTS3 according to the Iub which is the logical interface between the RNC and the BTS (step B26).

When receiving the ALCAP (Iub): ERQ, BTS3 returns the ALCAP (Iub): ECF to the DRNC (step B27).

When receiving the ALCAP (Iur): ECF and confirming the establishment of the connection at the C-Plane for establishing the U-Plane, the SRNC transmits the RRC: Active Set Update via the DRNC and BTS2 to the UE (step B28).

BTS3 transmits the NBAP: Radio Link Restore Ind to the DRNC, as the notification of the uplink synchronization (step B29). When receiving the NBAP: Radio Link Restore Ind, the DRNC transmits the Radio Link Restore Ind to the SRNC according to the RNSAP (step B30).

When receiving the RRC: Active Set Update, the UE transmits the RRC: Active Set Update Comp via BTS2 and the DRNC to the SRNC (step B31). Thus, as a result, the UE is present under BTS3.

When the RRC: Measurement Report for releasing the connection to BTS2 which has been established in the first hand over is transmitted from the UE via BTS3 to the SRNC (step B32), the SRNC transmits an RNSAP: Radio Link Deletion Req to the DRNC as the C-Plane release request (step B33).

When receiving the RNSAP: Radio Link Deletion Req, the DRNC transmits the Radio Link Deletion Req to BTS2 according to the NBAP, and executes a query (step B34). When receiving the NBAP: Radio Link Deletion Req, BTS2 returns the NBAP: Radio Link Deletion Resp to the DRNC (step B35). The DRNC transmits the Radio Link Deletion Resp to the SRNC according to the RNSAP (step B36).

When receiving the RNSAP: Radio Link Deletion Resp, the SRNC next transmits the ALCAP (Iur): REL to the DRNC as the connection release request at the C-Plane for establishing the U-Plane (step B37). When receiving the ALCAP (Iur): REL, the DRNC returns the ALCAP (Iur): RLC to the SRNC (step B38), and transmits the ALCAP (Iub): REL to BTS2 according to the Iub which is the logical interface between the RNC and the BTS (step B39).

When receiving the ALCAP (Iub): REL, BTS2 returns the ALCAP (Iub): RLC to the DRNC (step B40).

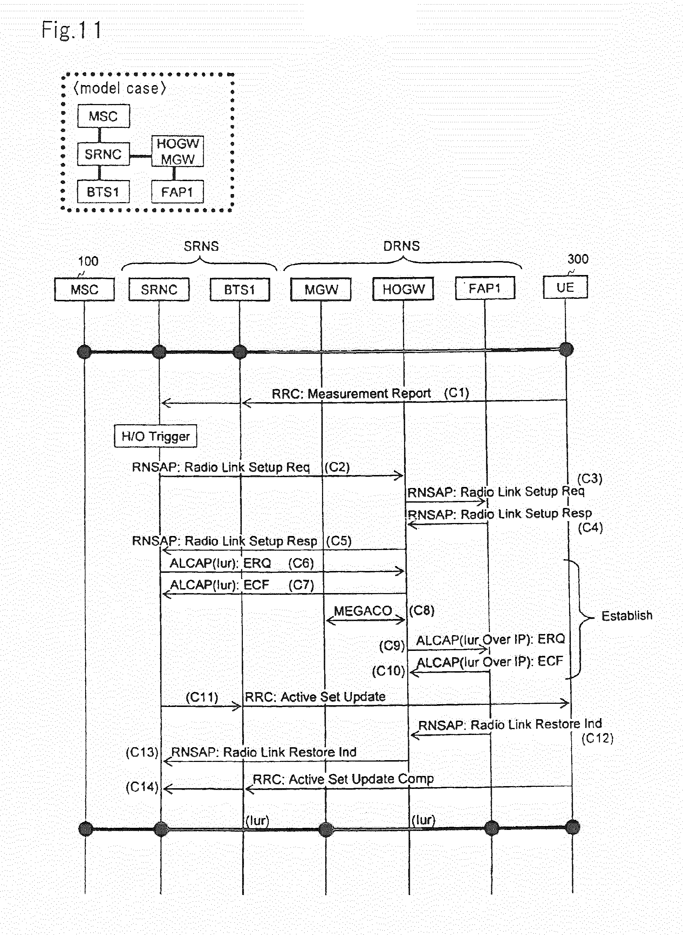

Next, the hand over from the macro cell to the femto cell in the communication system of the present exemplary embodiment will be described with reference to a sequence diagram of Figure 11.
In an example of Figure 11, a model case will be described in which the BTS to which UE 300 belongs before the movement due to the hand over is denoted as "BTS1", and the FAP to which UE 300 belongs after the movement due to the hand over is denoted as "FAP1". Moreover, the MGW, the HOGW and the FAP in the IMS network virtually function as the DRNS for the SRNS, and thus are denoted as "DRNS" in Figure 11.

First, in response to the hand over trigger, such as when the UE that is present under BTS1 senses that a radio wave from FAP1 is stronger than the radio wave from BTS1 by a value equal to or larger than a predetermined value, the UE transmits the RRC: Measurement Report via BTS1 to the SRNC (step C1). In response to the reception of the RRC: Measurement Report as the trigger for the hand over, the SRNC routes the connection route from the SRNC to the DRNS, and transmits the RNSAP: Radio Link Setup Req to the HOGW, as the C-Plane connection request (step C2).

When receiving the RNSAP: Radio Link Setup Req, the HOGW transmits the RNSAP: Radio Link Setup Req as the payload in the IP packet to FAP1, and executes a query (step C3). When receiving the RNSAP: Radio Link Setup Req, FAP1 returns the RNSAP: Radio Link Setup Resp as the payload in the IP packet to the HOGW (step C4). The HOGW transmits the RNSAP: Radio Link Setup Resp to the SRNC (step C5).

When receiving the RNSAP: Radio Link Setup Resp, the SRNC transmits an ALCAP (Iur): ERQ to the HOGW, as the connection request at the C-Plane for establishing the U-Plane (step C6). When receiving the ALCAP (Iur): ERQ, the HOGW returns the ALCAP (Iur): ECF to the SRNC (step C7), and provides a notification of channel assignment or the like for establishing the U-Plane connection, to the MGW, according to the MEGACO (step C8). Moreover, the HOGW transmits the ALCAP (Iur): ERQ as the payload in the IP packet to FAP1 (step C9).

When receiving the ALCAP (Iur Over IP): ERQ, FAP1 returns the ALCAP (Iur Over IP): ECF with the IP packet to the HOGW (step C10).

When receiving the ALCAP (Iur): ECF and confirming the establishment of the connection at the C-Plane for establishing the U-Plane, the SRNC transmits the RRC: Active Set Update via BTS1 to the UE (step C11).

FAP1 transmits the RNSAP: Radio Link Restore Ind with the payload in the IP packet to the HOGW, as the notification of the uplink synchronization (step C12). The HOGW transmits the RNSAP: Radio Link Restore Ind to the SRNC (step C13).

When receiving the RRC: Active Set Update, the UE transmits the RRC: Active Set Update Comp via BTS1 to the SRNC (step C 14). Thus, as a result, the UE is present under FAP1.

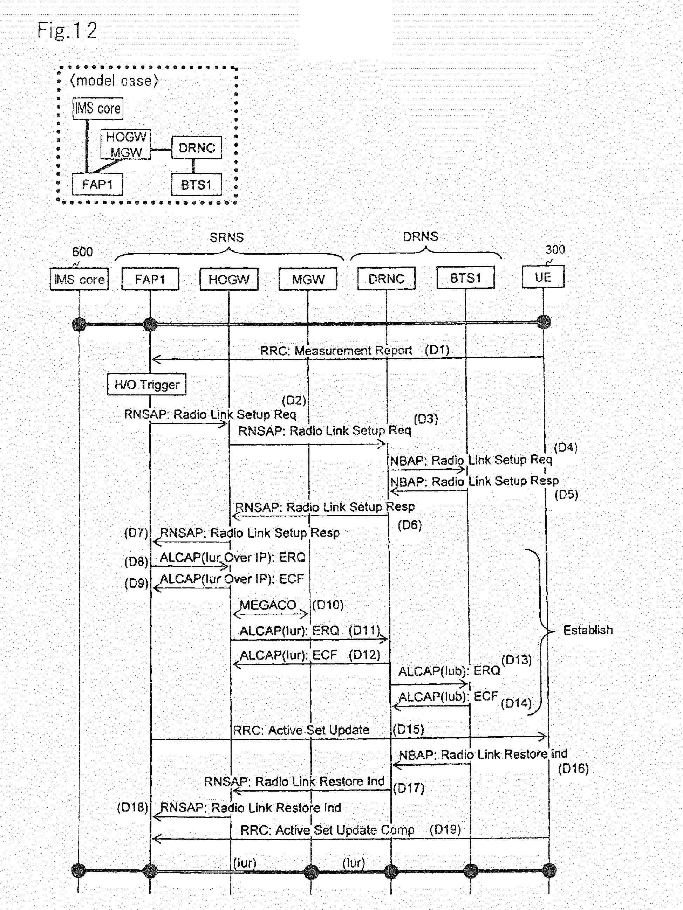

Next, the hand over from the femto cell to the macro cell in the communication system of the present exemplary embodiment will be described with reference to a sequence diagram of Figure 12.
In an example of Figure 12, a model case will be described in which the FAP to which UE 300 belongs before the movement due to the hand over is denoted as "FAP1", and the BTS to which UE 300 belongs after the movement due to the hand over is denoted as "BTS1". Moreover, the MGW, the HOGW and the FAP in the IMS network virtually function as the SRNS for the DRNS, and thus are denoted as "SRNS" in Figure 12.

First, in response to the hand over trigger, such as when the UE that is present under FAP1 senses that the radio wave from BTS1 is stronger than the radio wave from FAP1 by a value equal to or larger than a predetermined value, the UE transmits the RRC: Measurement Report to FAP1 (step D1). In response to the reception of the RRC: Measurement Report as the trigger for the hand over, FAP1 transmits the RNSAP: Radio Link Setup Req as the payload in the IP packet to the HOGW, as the C-Plane connection request (step D2). HOGW transmits the RNSAP: Radio Link Setup Req to the DRNC (step D3).

When receiving the RNSAP: Radio Link Setup Req, the DRNC transmits the Radio Link Setup Req to BTS1 according to the NBAP, and executes a query (step D4). When receiving the NBAP: Radio Link Setup Req, BTS returns the NBAP: Radio Link Setup Resp to the DRNC (step D5). The DRNC transmits the Radio Link Setup Resp to the HOGW according to the RNSAP (step D6). The HOGW transmits the RNSAP: Radio Link Setup Resp as the payload in the IP packet to FAP1 (step D7).

When receiving the RNSAP: Radio Link Setup Resp, FAP1 transmits the ALCAP (Iur): ERQ with the payload in the IP packet to the HOGW, as the connection request at the C-Plane for establishing the U-Plane (step D8). When receiving the ALCAP (Iur Over IP): ERQ, the HOGW returns the ALCAP (Iur Over IP): ECF to FAP1 (step D9), and provides the notification of the channel assignment or the like for establishing the U-Plane connection, to the MGW, according to the MEGACO (step D10). Moreover, the HOGW transmits the ALCAP (Iur): ERQ to the DRNC (step D11).

When receiving the ALCAP (Iur): ERQ, the DRNC returns the ALCAP (Iur): ECF to the HOGW (step D12), and transmits the ALCAP (Iub): ERQ to BTS1 according to the Iub which is the logical interface between the RNC and the BTS (step D13).

When receiving the ALCAP (Iub): ERQ, BTS1 returns the ALCAP (Iub): ECF to the DRNC (step D 14).

When receiving the ALCAP (Iur Over IP): ECF and confirming establishment of the connection at the C-Plane for establishing the U-Plane, FAP1 transmits the RRC: Active Set Update to the UE (step D15).

BTS1 transmits the NBAP: Radio Link Restore Ind to the DRNC, as the notification of the uplink synchronization (step D16). When receiving the NBAP: Radio Link Restore Ind, the DRNC transmits the Radio Link Restore Ind to the HOGW according to the RNSAP (step D17). When receiving the RNSAP: Radio Link Restore Ind, the HOGW transmits the RNSAP: Radio Link Restore Ind as the payload in the IP packet to FAP1 (step D18).

When receiving the RRC: Active Set Update, the UE transmits the RRC: Active Set Update Comp to FAP1 (step D19). Thus, as a result, the UE is present under BTS 1.

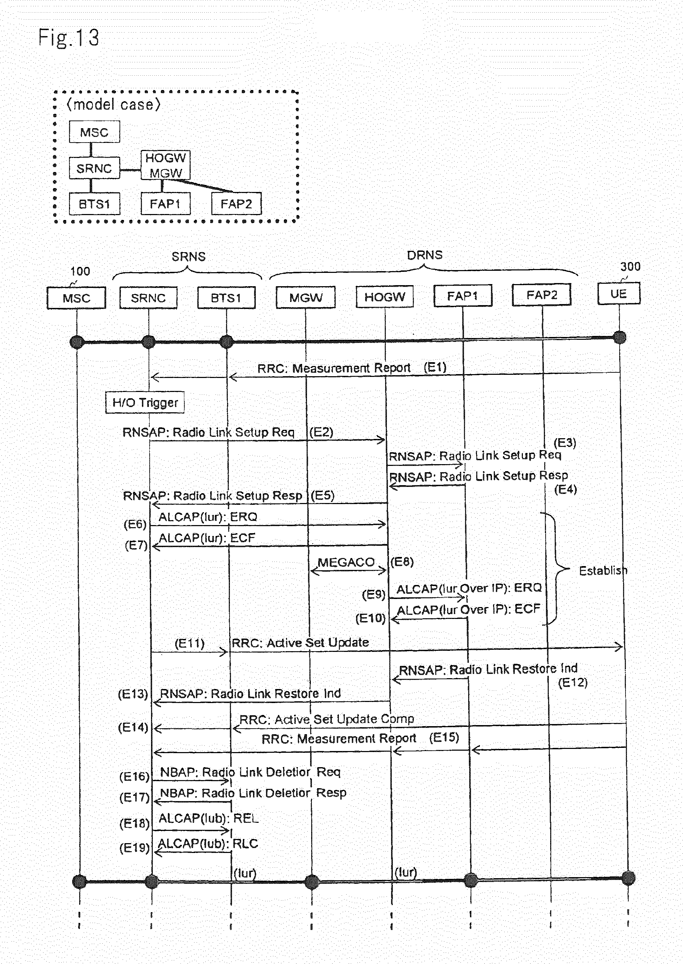

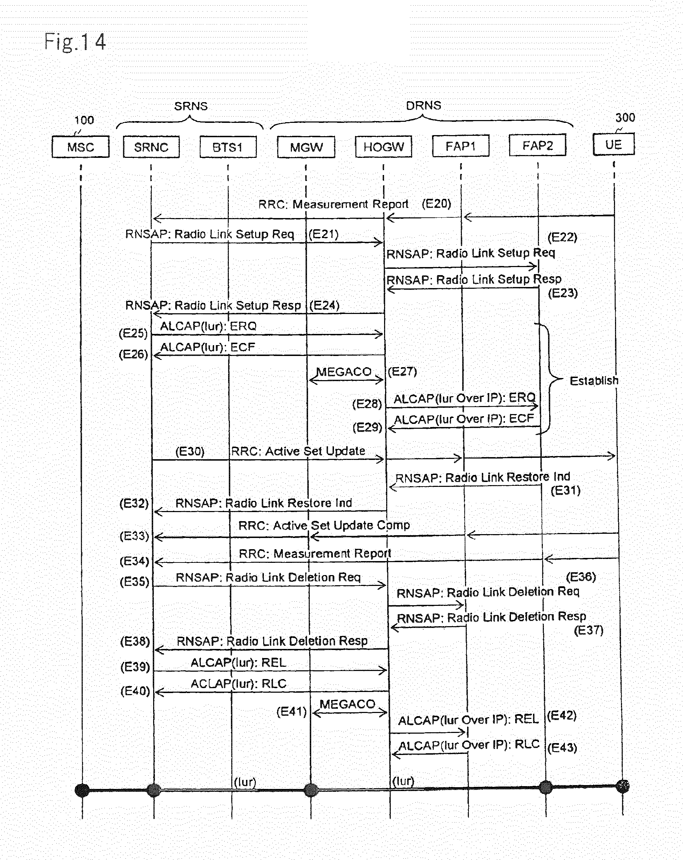

Next, the successive hand over from the macro cell to the femto cell, and further to another femto cell in the communication system of the present exemplary embodiment will be described with reference to sequence diagrams of Figures 13 and 14.
In examples of Figures 13 and 14, a model case will be described in which the BTS to which UE 300 belongs before the movement due to the hand over is denoted as "BTS1", the FAP to which UE 300 belongs after the movement due to the first hand over is denoted as "FAP1", and the FAP to which UE 300 belongs after the movement due to the second hand over is denoted as "FAP2". Moreover, the MGW, the HOGW and the FAP in the IMS network virtually function as the DRNS for the SRNS, and thus are denoted as "DRNS" in Figures 13 and 14.

First, according to operations similar to those in steps C1 to C 14 in the above described sequence diagram of Figure 11, the first hand over is performed from BTS1 to FAP1 (steps E1 to E14).

Thus, as a result, when the UE is also present under FAP1, the RRC: Measurement Report for releasing the connection to BTS1 which has been established before the hand over is transmitted from the UE via FAP1 and the HOGW to the SRNC (step E15). The SRNC transmits the Radio Link Deletion Req to BTS1 as the C-Plane release request according to the NBAP, and executes a query (step E16). When receiving the NBAP: Radio Link Deletion Req, BTS1 returns the NBAP: Radio Link Deletion Resp to the SRNC (step E17).

When receiving the NBAP: Radio Link Deletion Resp, the SRNC next transmits the ALCAP (Iub): REL to BTS1 as the connection release request at the C-Plane for establishing the U-Plane (step E18). When receiving the ALCAP (Iub): REL, BTS1 returns the ALCAP (Iub): RLC to the SRNC (step E19).

Thus, after the connection between the UE and BTS 1 has been released, in response to the hand over trigger, such as when it is sensed that a radio wave from FAP2 is stronger than the radio wave from FAP1 by a value equal to or larger than a predetermined value, the UE transmits the RRC: Measurement Report via FAP1 and the HOGW to the SRNC (step E20). In response to the reception of the RRC: Measurement Report as the trigger for the hand over, the SRNC routes the connection route due to the hand over, and transmits the RNSAP: Radio Link Setup Req to the HOGW, as the C-Plane connection request (step E21).

When receiving the RNSAP: Radio Link Setup Req, the HOGW transmits the RNSAP: Radio Link Setup Req as the payload in the IP packet to FAP2, and executes a query (step E22). When receiving the RNSAP: Radio Link Setup Req, FAP2 returns the RNSAP: Radio Link Setup Resp as the payload in the IP packet to the HOGW (step E23). The HOGW transmits the RNSAP: Radio Link Setup Resp to the SRNC (step E24).

When receiving the RNSAP: Radio Link Setup Resp, the SRNC transmits the ALCAP (Iur): ERQ to the HOGW, as the connection request at the C-Plane for establishing the U-Plane (step E25). When receiving the ALCAP (Iur): ERQ, the HOGW returns the ALCAP (Iur): ECF to the SRNC (step E26), and provides the notification of the channel assignment or the like for establishing the U-Plane connection, to the MGW, according to the MEGACO (step E27). Moreover, the HOGW transmits the ALCAP (Iur): ERQ as the payload in the IP packet to FAP2 (step E28).

When receiving the ALCAP (Iur Over IP): ERQ, FAP2 returns the ALCAP (Iur Over IP): ECF with the IP packet to the HOGW (step E29).

When receiving the ALCAP (Iur): ECF and confirming establishment of the connection at the C-Plane for establishing the U-Plane, the SRNC transmits the RRC: Active Set Update via the HOGW and FAP1 to the UE (step E30).

FAP2 transmits the RNSAP: Radio Link Restore Ind with the payload in the IP packet to the HOGW, as notification of the uplink synchronization (step E31). The HOGW transmits the RNSAP: Radio Link Restore Ind to the SRNC (step E32).

When receiving the RRC: Active Set Update, the UE transmits the RRC: Active Set Update Comp via FAP1 and the MGW to the SRNC (step E33). Thus, as a result, the UE is present under FAP2.

When the RRC: Measurement Report for releasing the connection to FAP1 which has been established in the first hand over is transmitted from the UE via FAP2 to the SRNC (step E34), the SRNC transmits the RNSAP: Radio Link Deletion Req to the HOGW as the C-Plane release request (step E35).

When receiving the RNSAP: Radio Link Deletion Req, the HOGW transmits the RNSAP: Radio Link Deletion Req as the payload in the IP packet to FAP1, and executes a query (step E36). When receiving the RNSAP: Radio Link Deletion Req, FAP1 returns the RNSAP: Radio Link Deletion Resp as the payload in the IP packet to the HOGW (step E37). The HOGW transmits the RNSAP: Radio Link Deletion Resp to the SRNC (step E38).

When receiving the RNSAP: Radio Link Deletion Resp, the SRNC next transmits the ALCAP (Iur): REL to the HOGW as the connection release request at the C-Plane for establishing the U-Plane (step E39). When receiving the ALCAP (Iur): REL, the HOGW returns the ALCAP (Iur): RLC to the SRNC (step E40), provides notification of the channel assignment or the like for releasing the U-Plane connection, to the MGW, according to the MEGACO (step E41), and transmits the ALCAP (Iur): REL as the payload in the IP packet to FAP1 (step E42).

When receiving the ALCAP (Iur Over IP): REL, FAP1 returns the ALCAP (Iur Over IP): RLC with the IP packet to the HOGW (step E43).

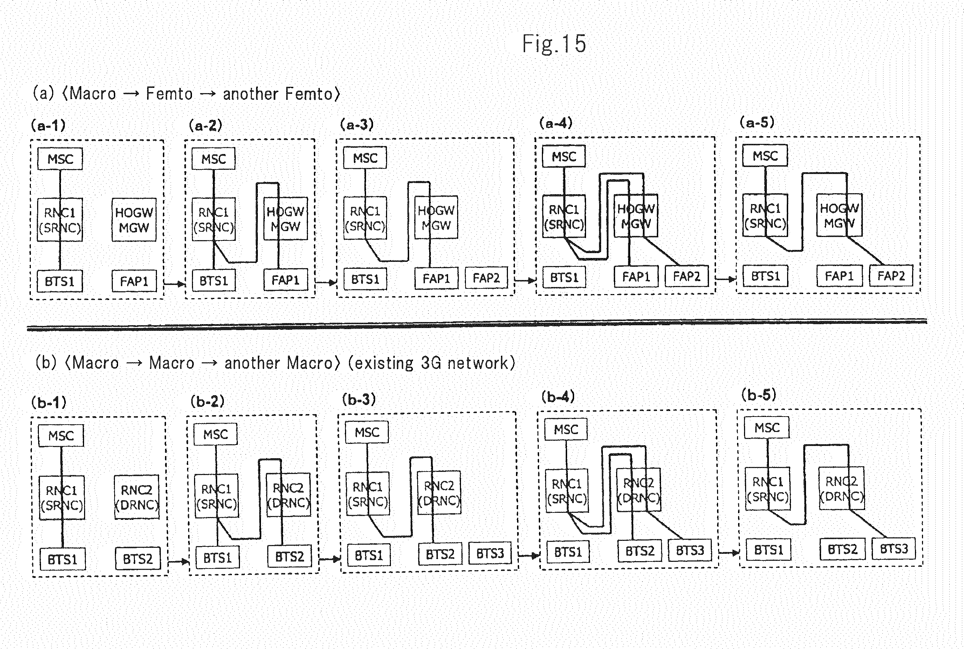

The above described successive hand over operation as shown in Figures 13 and 14 is shown in comparison with the successive hand over in the existing 3G network, in Figure 15.

As shown in Figure 15, in the successive hand over from the macro cell to the femto cell, and further to another femto cell in the communication system of the present exemplary embodiment, from a state where the UE exists under BTS1 as in status (a-1), the SRNC establishes the connection to FAP1 as in status (a-2), and the connection to BTS1 is released as in status (a-3). Then, as the next hand over, the SRNC becomes an anchor node to establish the connection to FAP2 as in status (a-4), and releases the connection to FAP1 as in status (a-5).

Moreover, in the successive hand over among the macro cells in the existing 3G network as described above in Figures 9 and 10, from the state where the UE is present under BTS1 as in status (b-1), the SRNC establishes the connection to BTS2 as in status (b-2), and the connection to BTS1 is released as in status (b-3). Then, as the next hand over, the SRNC becomes the anchor node to establish the connection to BTS3 as in status (b-4), and releases the connection to BTS2 as in status (b-5).

In this way, the operation for the successive hand over from the macro cell to the femto cell, and further to another femto cell according to the present exemplary embodiment, as shown in statuses (a-1) to (a-5), is completely similar to the successive hand over among the macro cells as shown in statuses (b-1) to (b-5), as seen from the SRNC.

Moreover, in the above described sequence diagrams of Figures 9 and 10 showing the successive hand over in the existing 3G network, it is described that, when the line connection is newly established due to successive hand over, the line connection established in previous hand over is released (steps B28 to B35). However, even in a configuration in which the line connection in the previous hand over is not released but is maintained, the successive hand over can be similarly realized.
In this case, the successive hand over becomes the operation in statuses (b-1) to (b-4), and in a state of status (b-4), the SRNC becomes the anchor node for a path switching operation, and the DRNC transparently provides a path with a line in the first hand over and a path with a line in the second hand over, and thereby it is determined where the UE belongs.

Moreover, in the above described sequence diagrams of Figures 13 and 14, it is described that, when the line connection is newly established due to the successive hand over, the line connection established in the previous hand over is released (steps E30 to E38). However, even in the configuration in which the line connection in the previous hand over is not released and is maintained, successive hand over can be similarly realized.
In this case, the successive hand over becomes the operation in statuses (a-1) to (a-4), and in a state of status (a-4), the SRNC becomes the anchor node for the path switching operation, and gateway device 400 transparently provides the path with the line in the first hand over and the path with the line in the second hand over, and thereby it is determined where the UE belongs.

In this way, in the sequence diagrams of Figures 13 and 14, even in the configuration in which the line connection in the previous hand over is not released but is maintained in the successive hand over, the operation for the successive hand over from the macro cell to the femto cell, and further to another femto cell according to the present exemplary embodiment is completely similar to the operation in statuses (b-1) to (b-4) in the successive hand over among the macro cells, as seen from the SRNC in the existing 3G network.

In this way, according to the present exemplary embodiment, also in the successive hand over from the macro cell to the femto cell, and further to another femto cell, gateway device 400 and FAP 500 configure the virtual RNC means, and each device in the existing 3G network can perform the hand over process by performing an operation similar to the Iur-HO scheme for the existing 3G network.

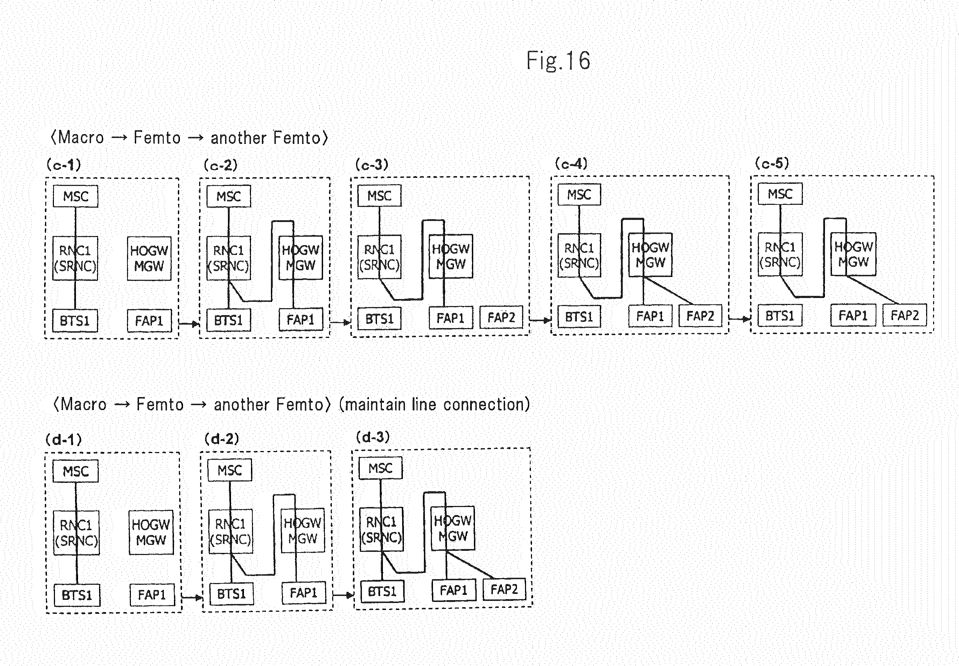

Moreover, the successive hand over from the macro cell to the femto cell, and further to another femto cell in the communication system of the present exemplary embodiment is not limited to the above described operation shown in statuses (a-1) to (a-5), and for example, may be in a configuration for operating as in statuses (c-1) to (c-5) shown in Figure 16.

In statuses (c-1) to (c-5) shown in Figure 16, after the hand over from BTS1 to FAP1 is performed similarly to statuses (a-1) to (a-3) shown in Figure 15, gateway device 400 becomes the anchor node to establish the connection to FAP2 in status (c-4). Moreover, in a case of a configuration in which the line connection in the previous hand over is released, gateway device 400 releases the connection to FAP1 as in status (c-5). In this way, even in the configuration in which the SRNC is in charge of the hand over from BTS1 to FAP1, and gateway device 400 becomes the anchor node to perform the hand over between the femto cells, the virtual RNC means as the present exemplary embodiment can be similarly realized.

Moreover, in a case of a configuration in which, in the successive hand over, the line connections which have been established until then are not released but are maintained within an upper limit of the number of lines to which the UE can connect, the successive hand over becomes the operation in statuses (d-1) to (d-3) shown in Figure 16.
In a state of status (d-2), the SRNC becomes the anchor node for the path switching operation to determine where the UE belongs. Moreover, in a state of status (d-3), the SRNC becomes the anchor node for the path switching operation, and gateway device 400 transparently provides the path with the line in the first hand over and the path with the line in the second hand over, and thereby it is determined where the UE belongs.

In this way, even in the configuration in which the operation is performed as in statuses (d-1) to (d-3), and in which the line connections which have been established until then are not released but are maintained in the successive hand over, the virtual RNC means as the present exemplary embodiment can be similarly realized.

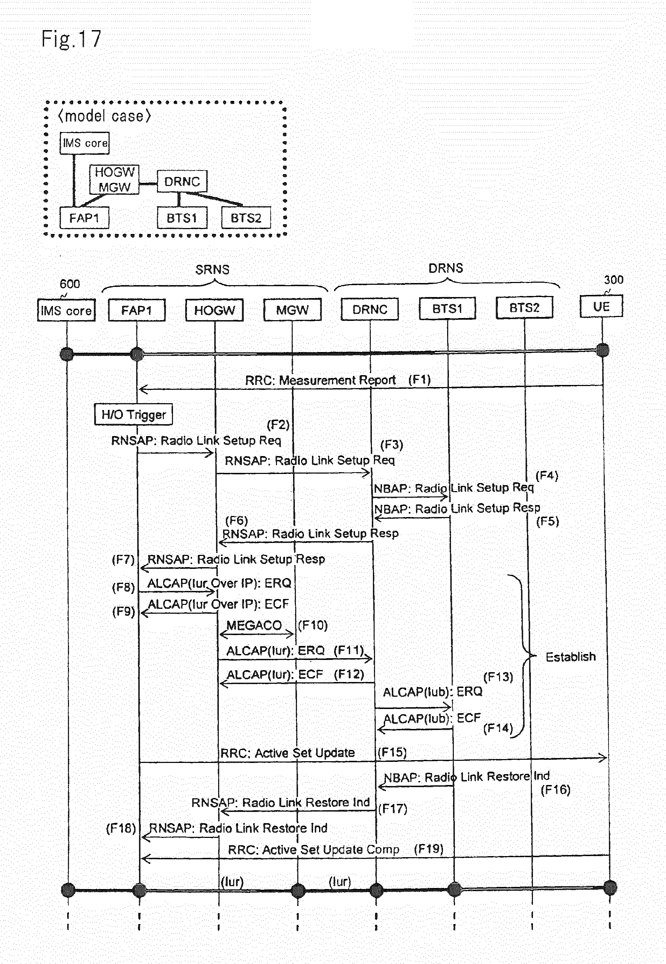

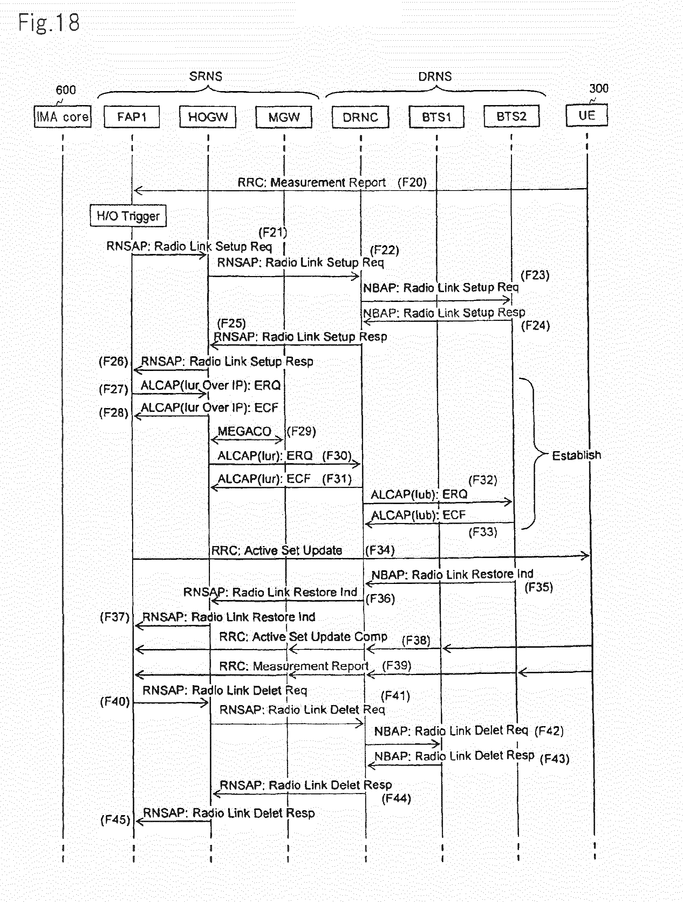

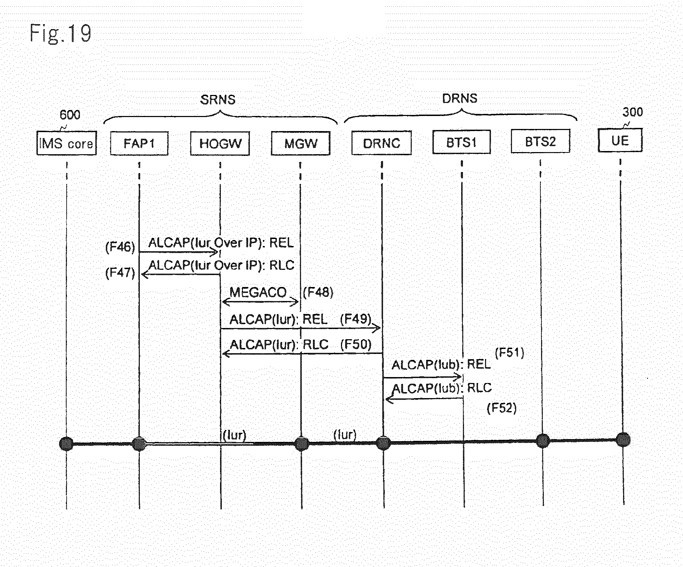

Next, the successive hand over from the femto cell to the macro cell, and further to another macro cell in the communication system of the present exemplary embodiment will be described with reference to sequence diagrams of Figures 17 to 19.
In examples of Figures 17 to 19, a model case will be described in which the FAP to which UE 300 belongs before the movement due to the hand over is denoted as "FAP1", the BTS to which UE 300 belongs after the movement due to the first hand over is denoted as "BTS1", and the BTS to which UE 300 belongs after the movement due to the second hand over is denoted as "BTS2". Moreover, the MGW, the HOGW and the FAP in the IMS network virtually function as the SRNS for the DRNS, and thus are denoted as "SRNS" in Figures 17 to 19.

First, according to operations similar to those in steps D to D 19 in the above described sequence diagram of Figure 12, the first hand over is performed from FAP1 to BTS1 (steps F1 to F19).

Thus, as a result, after the UE is also present under BTS1, in response to the hand over trigger, such as when it is sensed that the radio wave from BTS2 is stronger than the radio wave from FAP1 by a value equal to or larger than a predetermined value, the UE transmits the RRC: Measurement Report to FAP1 (step F20). In response to the reception of the RRC: Measurement Report as the trigger for the hand over, FAP1 transmits the RNSAP: Radio Link Setup Req as the payload in the IP packet to the HOGW, as the C-Plane connection request (step F21). The HOGW transmits the RNSAP: Radio Link Setup Req to the DRNC (step F22).

When receiving the RNSAP: Radio Link Setup Req, the DRNC transmits the Radio Link Setup Req to BTS2 according to the NBAP, and executes a query (step F23). When receiving the NBAP: Radio Link Setup Req, BTS2 returns the NBAP: Radio Link Setup Resp to the DRNC (step F24). The DRNC transmits the Radio Link Setup Resp to the HOGW according to the RNSAP (step F25). The HOGW transmits the RNSAP: Radio Link Setup Resp as the payload in the IP packet to FAP (step F26).

When receiving the RNSAP: Radio Link Setup Resp, FAP1 transmits the ALCAP (Iur): ERQ with the payload in the IP packet to the HOGW, as the connection request at the C-Plane for establishing the U-Plane (step F27). When receiving the ALCAP (Iur Over IP): ERQ, the HOGW returns the ALCAP (Iur Over IP): ECF to FAP1 (step F28), and provides the notification of the channel assignment or the like for establishing the U-Plane connection, to the MGW, according to the MEGACO (step F29). Moreover, the HOGW transmits the ALCAP (Iur): ERQ to the DRNC (step F30).

When receiving the ALCAP (Iur): ERQ, the DRNC returns the ALCAP (Iur): ECF to the HOGW (step F31), and transmits the ALCAP (Iub): ERQ to BTS2 according to the Iub which is the logical interface between the RNC and the BTS (step F32).

When receiving the ALCAP (Iub): ERQ, BTS2 returns the ALCAP (Iub): ECF to the DRNC (step F33).

When receiving the ALCAP (Iur Over IP): ECF and confirming the establishment of the connection at the C-Plane for establishing the U-Plane, FAP1 transmits the RRC: Active Set Update to the UE (step F34).

BTS2 transmits the NBAP: Radio Link Restore Ind to the DRNC, as the notification of the uplink synchronization (step F35). When receiving the NBAP: Radio Link Restore Ind, the DRNC transmits the Radio Link Restore Ind to the HOGW according to the RNSAP (step F36). When receiving the RNSAP: Radio Link Restore Ind, the HOGW transmits the RNSAP: Radio Link Restore Ind as the payload in the IP packet to FAP1 (step F37).

When receiving the RRC: Active Set Update, the UE transmits the RRC: Active Set Update Comp via BTS1, the DRNC and the MGW to FAP1 (step F38). Thus, as a result, the UE exists under BTS2.

When the RRC: Measurement Report for releasing the connection to BTS1 which has been established in the first hand over is transmitted from the UE via BTS2, the DRNC and the MGW to FAP1 (step E39), FAP1 transmits the RNSAP: Radio Link Deletion Req as the payload in the IP packet to the HOGW as the C-Plane release request (step F40).

When receiving the RNSAP: Radio Link Deletion Req, the HOGW transmits the RNSAP: Radio Link Deletion Req to the DRNC (step F41). When receiving the RNSAP: Radio Link Deletion Req, the DRNC transmits the Radio Link Deletion Req to BTS1 according to the NBAP, and executes a query (step F42). When receiving the NBAP: Radio Link Deletion Req, BTS 1 returns the NBAP: Radio Link Deletion Resp to the DRNC (step F43). The DRNC transmits the Radio Link Deletion Resp to the HOGW according to the RNSAP (step F44). The HOGW transmits the RNSAP: Radio Link Deletion Resp as the payload in the IP packet to FAP1 (step F45).

When receiving the RNSAP: Radio Link Deletion Resp, FAP1 transmits ALCAP (Iur): REL with the payload in the IP packet to the HOGW as the connection release request at the C-Plane for establishing the U-Plane (step F46). When receiving the ALCAP (Iur Over IP): REL, the HOGW returns the ALCAP (Iur Over IP): RLC to FAP1 (step F47), and provides the notification of the channel assignment or the like for releasing the U-Plane connection, to the MGW, according to the MEGACO (step F48). Moreover, the HOGW transmits the ALCAP (Iur): REL to the DRNC (step F49).

When receiving the ALCAP (Iur): REL, the DRNC returns the ALCAP (Iur): RLC to the HOGW (step F50), and transmits the ALCAP (Iub): REL to BTS1 according to the Iub which is the logical interface between the RNC and the BTS (step F51).

When receiving the ALCAP (Iub): REL, BTS1 returns the ALCAP (Iub): RLC to the DRNC (step F52).

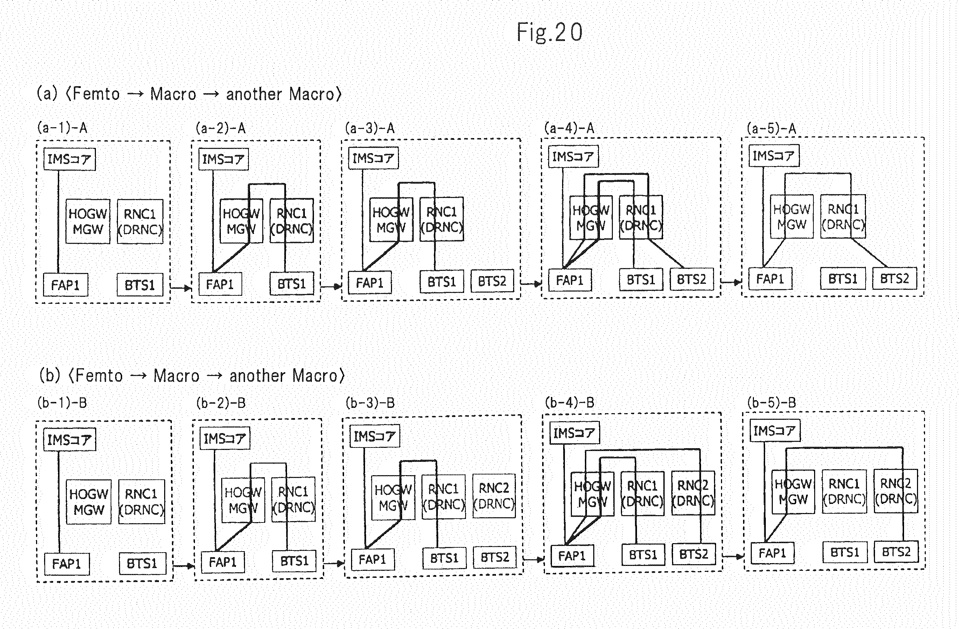

The operation for the successive hand over from the femto cell to the macro cell, and further to another macro cell according to the present exemplary embodiment, as shown in Figures 17 to 19, is performed as shown in statuses (a-1)-A to (a-5)-A shown in Figure 20.

In other words, first, from a state where the UE exists under FAP1 as in status (a-1)-A, FAP1 establishes the connection to BTS1 via gateway device 400 and the DRNC, as in status (a-2)-A. Then, as the next hand over, from the state where the UE exists under BTS1 as in status (a-3)-A, FAP1 becomes the anchor node to establish the connection to BTS2 via gateway device 400 and the DRNC, as in status (a-4)-A, and releases the connection from FAP1 to BTS1 as in status (a-5)-A.

Moreover, the operation for the successive hand over from the femto cell to the macro cell, and further to another macro cell according to the present exemplary embodiment is not limited to the operation shown in statuses (a-1)-A to (a-5)-A, and may be an operation shown in statuses (b-1)-B to (b-5)-B shown in Figure 20.

In statuses (b-1)-B to (b-5)-B, after FAP1 establishes the connection to BTS1 via gateway device 400 and RNC1, and performs the hand over to BTS1 similarly to statuses (a-1)-A to (a-3)-A, FAP1 becomes the anchor node to establish the connection to BTS2 via gateway device 400 and RNC2 in status (b-4)-B, and releases the connection from FAP1 to BTS1 as in status (b-5)-B.

Moreover, in the above described sequence diagrams of Figures 17 to 19, it is described that, when the line connection is newly established due to the successive hand over, the line connection established in the previous hand over is released (steps F40 to F52). However, even in the configuration in which the line connection in the previous hand over is not released and is maintained, the successive hand over can be similarly realized.
In this case, the operation for the successive hand over from the femto cell to the macro cell, and further to another macro cell becomes the operation in statuses (a-1)-A to (a-4)-A. In a state of status (a-4)-A, FAP1 becomes the anchor node for the path switching operation, and gateway device 400 and the DRNC transparently provide the path with the line in the first hand over and the path with the line in the second hand over, and thereby it is determined where the UE belongs.

Moreover, also in a case of the operation in statuses (b-1)-B to (b-5)-B, similarly, the operation in statuses (b-1)-B to (b-4)-B is performed, and in a state in status (b-4)-B, FAP1 becomes the anchor node for the path switching operation, and gateway device 400 transparently provides the path with the line in the first hand over and the path with the line in the second hand over, and thereby it is determined where the UE belongs. Thereby, the successive hand over can be similarly realized.

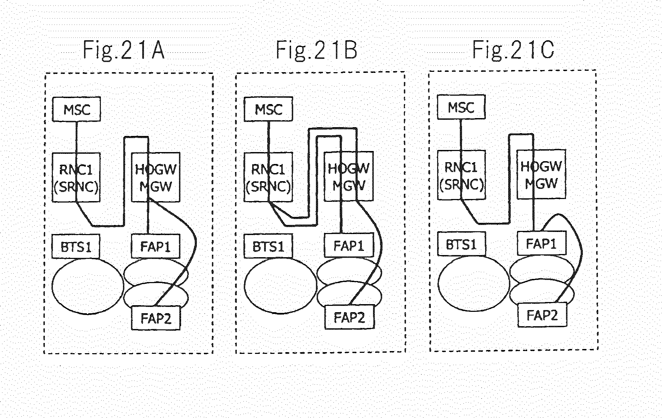

Moreover, in the successive hand over between the existing 3G network and the IMS network in the above described exemplary embodiment, it is described that the line connection to each FAP or BTS is sequentially established. However, the successive hand over between the existing 3G network and the IMS network is not limited to this operation if the virtual RNC means as the present exemplary embodiment can be realized, and for example, may be in a configuration in which the line connections to the FAPs or the BTSs are established in parallel as shown in Figures 21A to 21C.

In an example of Figure 21A, a configuration is employed in which gateway device 400 establishes the line connections to the FAPs. In this case, gateway device 400 becomes the anchor node for the path switching operation, and it is determined where the UE belongs.
In other words, for example, if the hand over is performed from BTS1 to FAP1, and to FAP2 to be in a state of Figure 21A, gateway device 400 switches between a path with a line to FAP1 and a path with a line to FAP2, and thereby it is determined where the UE belongs.

Moreover, for example, if the successive hand over is performed from BTS1 to FAP1, and further to FAP2 to be in the state of Figure 21A, gateway device 400 becomes the anchor node to perform the line connection to FAP2. In this case, gateway device 400 functions as the anchor node for the switching operation for switching the path for the line connection, and switches between the path with the line in the first hand over and the path with the line in the second hand over, and thereby it is determined where the UE belongs.
In this way, even in the configuration in which the SRNC is in charge of the hand over from BTS1 to FAP1, and gateway device 400 becomes the anchor node to perform the hand over between the femto cells, the virtual RNC means as the present exemplary embodiment can be similarly realized.

Moreover, in an example of Figure 21B, a configuration is employed in which the SRNC establishes the line connections to the FAPs via gateway device 400. In this case, the SRNC becomes the anchor node for the path switching operation, gateway device 400 transparently provides the path, and thereby it is determined where the UE belongs.

Moreover, as in the example of Figure 21C, a configuration may be employed in which the line connection to another FAP is also sequentially established via the FAP to which the line connection has been established from gateway device 400. In this case, the FAP which relays the line connection becomes the anchor node for the path switching operation, and it is determined where the UE belongs.

As described above, according to the above described exemplary embodiment, the gateway device including the HOGW and the MGW in the IMS network, as well as the FAP perform the transmission and the reception to and from the RNC in the existing 3G network, in a manner similar to an RNC, in the hand over, and thereby, the virtual RNC means including the gateway device and the FAP can be configured.
Consequently, similarly to the hand over according to the Iur-HO scheme, the RNC in the existing 3G network can transmit and receive a message of hand over information for the call control just by operating according to a scheme defined in the standards of 3GPP standard functions (TR25.931), and the hand over between the FAP in the IMS network and the BTS in the existing 3G network can be realized.

In other words, for the transmission and the reception of the message of the hand over information in a layer higher than a physical layer, similarly to the hand over according to the Iur-HO scheme, the message can be transmitted and received between the RNC and the virtual RNC means without involving MSC 100 and IMS core 600.

Consequently, the hand over can be realized between the IMS network and the existing mobile communication network, within a range of communication defined in the standards such as 3GPP, without requiring improvement of each device, such as the MSC or the RNC, in the existing mobile communication network, such as addition of a function to each device.

Moreover, between the existing 3G network and the FAP in the IMS network, gateway device 400 which performs the protocol conversion between ATM-based communication and IP-based communication is included, and this gateway device 400 performs the communication with the RNC in the existing 3G network, with an RNC ID.
Consequently, the virtual RNC means including the gateway device and the FAP is virtually recognized as an RNC by the RNC in the existing 3G network. Consequently, for the RNC in the existing 3G network, additional design of the RNC ID can also be easily performed.

Moreover, as the C-Plane for establishing the U-Plane between the FAP and the MGW, communication is performed according to the ALCAP, and thus the system can also have high affinity with Radio Link Addition of the 3GPP standards (TR25.931).
Moreover, as the U-Plane between the FAP and the MGW, communication is performed according to the RTP, and thus the system can also have high affinity with VoIP technology in the IMS scheme.

Moreover, also for successive hand over from the macro cell to the femto cell, and further to another femto cell, and for successive hand over from the femto cell to the macro cell, and further to another macro cell, the virtual RNC means can be configured with the gateway device and the FAP, and the above described respective advantageous effects can be obtained.

Note that the above described respective exemplary embodiments are exemplary embodiments, the present invention is not limited thereto, and a variety of variations can be practiced based on the technical idea of the present invention.

For example, in the above described exemplary embodiments, it is described that the protocol in the signal transmitted from HOGW 420 to FAP 500 in the IMS network is the RNSAP for the C-Plane and the ALCAP for the C-Plane for establishing the U-Plane. However, in a configuration in which gateway device 400 performs the protocol conversion to a signal in accordance with a predefined protocol corresponding to the signal protocol from the existing 3G network, and transmits the signal as the IP packet to FAP 500, the present invention can be similarly realized even if the protocol that is used is any protocol.

Moreover, in the above described exemplary embodiments, the configuration using an intra-frequency (FDD mode) hand over scheme between the same frequencies has been described. However, depending on the form of the communication system, even if an intra-frequency (TDD mode) hand over scheme with a different communication scheme or an inter-frequency (FDD and TDD mode) hand over scheme between different frequencies is used, the technical idea according to the present invention can be similarly realized.

Moreover, the system or the device in the present specification refers to a logical collection of functional modules which realize particular functions, and it does not particularly matter whether or not each device or each functional module is within a case.

For example, gateway device 400 may be configured to include two devices of MGW 410 and HOGW 420, or may be a device. Moreover, gateway device 400 may be realized with devices including various functions.
Moreover, a process procedure for realizing the FAP and the gateway device as the above described exemplary embodiments is recorded as a program in a recording medium, and thereby, the above described respective functions according to the exemplary embodiments can be realized by causing the CPU of a computer which configures the system to perform the process by means of the program supplied from the recording medium.
In this case, the present invention is also applicable if an information group including the program is supplied to an output device from the above described recording medium, or from an external recording medium via a network.
In other words, the program code itself read out from the recording medium realizes a novel function of the present invention, and the recording medium storing the program code and the signal read out from this recording medium configure the present invention.
As this recording medium, for example, a hard disk, an optical disk, a magnetic optical disk, a floppy (R) disk, a magnetic tape, a nonvolatile memory card, a ROM or the like may be used.

According to this program according to the present invention, the FAP and the gateway device controlled by this program can be caused to realize each function in the above described exemplary embodiments.
While the invention of the present application has been described above with reference to the exemplary embodiments, the invention of the present application is not limited to the above described exemplary embodiments. Various changes which can be understood by those skilled in the art can be made to the configuration or details of the invention of the present application, within the scope of the invention of the present application.
The present application claims priority based on Japanese Patent Application No. 2010-181903 filed on August 16, 2010, whose entire disclosure is incorporated herein.

**Reference Signs List**

| | |
|---|---|
| 100 | MSC |
| 110 | GMSC |
| 200 | RAN |
| 210 | RNC |
| 220 | BTS |
| 300 | UE |
| 400 | GW device |
| 410 | MGW |
| 420 | HOGW |
| 500 | FAP |
| 600 | IMS core |

## Claims

1. A communication system which is connected to another communication system with a different communication procedure and is used, wherein
the other communication system comprises an RNC (Radio Network Controller) and a BTS (Base Transceiver Station);
the communication system comprises a gateway device and a Femto Access Point;
the gateway device and the Femto Access Point configure virtual RNC means which is recognized as an RNC by the RNC when communication with the RNC is performed; and
if hand over is performed between the BTS and the Femto Access Point, the virtual RNC means transmits and receives a message containing hand over information for call control to and from the RNC.

2. The communication system according to claim 1, wherein
the other communication system is a mobile communication network comprising a core device which performs the call control for UE (user equipment);
the communication system is an IMS (IP Multimedia Subsystem) network comprising a core network which performs the call control for the UE; and
if the hand over is performed between the BTS and the Femto Access Point, in the transmission and the reception of the message containing the hand over information for the call control between the virtual RNC means and the RNC, the transmission and the reception are performed without involving both the core device and the core network.

3. The communication system according to claim 1 or 2, wherein
the gateway device comprises a protocol converter which, if the gateway device as the virtual RNC means receives a signal from the RNC, converts the signal into a predefined protocol of the IMS network corresponding to a protocol of the signal, and transmits the converted signal to the Femto Access Point; and
the protocol converter converts data from the RNC into the protocol of the IMS network, includes the converted data into an IP packet, and transmits the converted data included in the IP packet to the Femto Access Point.

4. The communication system according to any one of claims 1 to 3, wherein
after the hand over is performed from the BTS to one of the Femto Access Points, if successive hand over to another one of the Femto Access Points is further sequentially performed, and a line connection established in previous hand over and a line connection in next hand over are maintained,
the RNC becomes an anchor node for a switching operation for switching a path for the line connection; and
the gateway device transparently provides the line connection established in the previous hand over and the line connection in the next hand over.

5. The communication system according to any one of claims 1 to 3, wherein
after the hand over is performed from the BTS to one of the Femto Access Points, if successive hand over to another one of the Femto Access Points is further sequentially performed, and a line connection established in previous hand over and a line connection in next hand over are maintained,
the gateway device is configured to function as an anchor node for a switching operation for switching a path for the line connection, after the hand over from the BTS to one of the Femto Access Points, and to sequentially perform the successive hand over to another one of the Femto Access Points.

6. A gateway device in a communication system which is connected to another communication system with a different communication procedure and which is used, wherein
the other communication system comprises an RNC (Radio Network Controller) and a BTS (Base Transceiver Station);
the communication system comprises the gateway device and a Femto Access Point;
the gateway device comprises control means which configures virtual RNC means together with the Femto Access Point, the virtual RNC means being recognized as an RNC by the RNC when communication with the RNC is performed; and
if hand over is performed between the BTS and the Femto Access Point, the virtual RNC means transmits and receives a message containing hand over information for call control to and from the RNC.

7. The gateway device according to claim 6, wherein
the other communication system is a mobile communication network comprising a core device which performs the call control for UE (user equipment);
the communication system is an IMS (IP Multimedia Subsystem) network comprising a core network which performs the call control for the UE; and
if the hand over is performed between the BTS and the Femto Access Point, in the transmission and the reception of the message containing the hand over information for the call control between the virtual RNC means and the RNC, the transmission and the reception are performed without involving both the core device and the core network.

8. The gateway device according to claim 6 or 7, wherein
the gateway device comprises a protocol converter which, if the gateway device as the virtual RNC means receives a signal from the RNC, converts the signal into a predefined protocol of the IMS network corresponding to a protocol of the signal, and transmits the converted signal to the Femto Access Point; and
the protocol converter converts data from the RNC into the protocol of the IMS network, includes the converted data into an IP packet, and transmits the converted data included in the IP packet to the Femto Access Point.

9. The gateway device according to any one of claims 6 to 8, wherein
after the hand over is performed from the BTS to one of the Femto Access Points, if successive hand over to another one of the Femto Access Points is further sequentially performed, and a line connection established in previous hand over and a line connection in next hand over are maintained,
the RNC becomes an anchor node for a switching operation for switching a path for the line connection; and
the gateway device transparently provides the line connection established in the previous hand over and the line connection in the next hand over.

10. The gateway device according to any one of claims 6 to 8, wherein
after the hand over is performed from the BTS to one of the Femto Access Points, if successive hand over to another one of the Femto Access Points is further sequentially performed, and a line connection established in previous hand over and a line connection in next hand over are maintained,
the gateway device is configured to function as an anchor node for a switching operation for switching a path for the line connection, after the hand over from the BTS to one of the Femto Access Points, and to sequentially perform the successive hand over to another one of the Femto Access Points.

11. A Femto Access Point in a communication system which is connected to another communication system with a different communication procedure and is used, wherein
the other communication system comprises an RNC (Radio Network Controller) and a BTS (Base Transceiver Station);
the communication system comprises a gateway device and the Femto Access Point;
the Femto Access Point comprises control means which configures virtual RNC means together with the gateway device, the virtual RNC means being recognized as an RNC by the RNC when communication with the RNC is performed; and
if hand over is performed between the BTS and the Femto Access Point, the virtual RNC means transmits and receives a message containing hand over information for call control to and from the RNC.

12. The Femto Access Point according to claim 11, wherein
the control means includes data in accordance with a predefined protocol of an IMS network into an IP packet, and thereby transmits and receives the message containing the hand over information to and from the gateway device.

13. A communication method between a communication system and another communication system with a different communication procedure, wherein
the other communication system comprises an RNC (Radio Network Controller) and a BTS (Base Transceiver Station);
the communication system comprises a gateway device and a Femto Access Point; and the gateway device and the Femto Access Point configure virtual RNC means which is recognized as an RNC by the RNC when communication with the RNC is performed, and if hand over is performed between the BTS and the Femto Access Point, the virtual RNC means transmits and receives a message containing hand over information for call control to and from the RNC, and a line connection to a hand over destination is established.

14. The communication method according to claim 13, wherein
the other communication system is a mobile communication network comprising a core device which performs the call control for UE (user equipment);
the communication system is an IMS (IP Multimedia Subsystem) network comprising a core network which performs the call control for the UE; and
if the hand over is performed between the BTS and the Femto Access Point, in the transmission and the reception of the message containing the hand over information for the call control between the virtual RNC means and the RNC, the transmission and the reception are performed without involving both the core device and the core network.

15. The communication method according to claim 13 or 14, comprising a protocol conversion step in which, if the gateway device as the virtual RNC means receives a signal from the RNC, the gateway device converts the signal into a predefined protocol of the IMS network corresponding to a protocol of the signal, and transmits the converted signal to the Femto Access Point,
wherein, in the protocol conversion step, the gateway device converts data from the RNC into the protocol of the IMS network, includes the converted data into an IP packet, and transmits the converted data included in the IP packet to the Femto Access Point.

16. The communication method according to any one of claims 13 to 15, wherein
after the hand over is performed from the BTS to one of the Femto Access Points, if successive hand over to another one of the Femto Access Points is further sequentially performed, and a line connection established in previous hand over and a line connection in next hand over are maintained, the RNC becomes an anchor node for a switching operation for switching a path for the line connection, the gateway device transparently provides the line connection established in the previous hand over and the line connection in the next hand over, and thereby the switched line connection is established.

17. The communication method according to any one of claims 13 to 15, wherein
after the hand over is performed from the BTS to one of the Femto Access Points, if successive hand over to another one of the Femto Access Points is further sequentially performed, and a line connection established in previous hand over and a line connection in next hand over are maintained, the gateway device functions as an anchor node for a switching operation for switching a path for the line connection, after the hand over from the BTS to one of the Femto Access Points, and sequentially performs successive hand over to another one of the Femto Access Points, and thereby a line connection to a destination of the switching is established.

18. A program for a gateway device in a communication system which is connected to another communication system with a different communication procedure and which is used, wherein
the other communication system comprises an RNC (Radio Network Controller) and a BTS (Base Trans ceiver Station);
the communication system comprises the gateway device and a Femto Access Point;
the gateway device is caused to configure virtual RNC means together with the Femto Access Point, the virtual RNC means being recognized as an RNC by the RNC when communication with the RNC is performed; and
if hand over is performed between the BTS and the Femto Access Point, a procedure in which the virtual RNC means transmits and receives a message containing hand over information for call control to and from the RNC is caused to be executed.

19. The program for the gateway device according to claim 18, wherein
the other communication system is a mobile communication network comprising a core device which performs the call control for UE (user equipment);
the communication system is an IMS (IP Multimedia Subsystem) network comprising a core network which performs the call control for the UE; and
if the hand over is performed between the BTS and the Femto Access Point, in the transmission and the reception of the message containing the hand over information for the call control between the virtual RNC means and the RNC, a procedure for performing the transmission and the reception without involving both the core device and the core network is caused to be executed.

20. The program for the gateway device according to claim 18 or 19, wherein
the gateway device is caused to execute a protocol conversion procedure for, if the gateway device as the virtual RNC means receives a signal from the RNC, converting the signal into a predefined protocol of the IMS network corresponding to a protocol of the signal, and transmitting the converted signal to the Femto Access Point; and
in the protocol conversion procedure, the gateway device converts data from the RNC into the protocol of the IMS network, includes the converted data into an IP packet, and transmits the converted data included in the IP packet to the Femto Access Point.

21. The program for the gateway device according to any one of claims 18 to 20, wherein
after the hand over is performed from the BTS to one of the Femto Access Points, if successive hand over to another one of the Femto Access Points is further sequentially performed, and a line connection established in previous hand over and a line connection in next hand over are maintained, the RNC becomes an anchor node for a switching operation for switching a path for the line connection; and
the gateway device is caused to execute a procedure for transparently providing the line connection established in the previous hand over and the line connection in the next hand over, and thereby for establishing the switched line connection.

22. The program for the gateway device according to any one of claims 18 to 20, wherein
after the hand over is performed from the BTS to one of the Femto Access Points, if successive hand over to another one of the Femto Access Points is further sequentially performed, and a line connection established in previous hand over and a line connection in next hand over are maintained,
the gateway device is caused to function as an anchor node for a switching operation for switching a path for the line connection, after the hand over from the BTS to one of the Femto Access Points, and thereby the gateway device is caused to execute a procedure for sequentially performing the successive hand over to another one of the Femto Access Points, and thereby for establishing a line connection to a destination of the switching.

23. A program for a Femto Access Point in a communication system which is connected to another communication system with a different communication procedure and which is used, wherein
the other communication system comprises an RNC (Radio Network Controller) and a BTS (Base Transceiver Station);
the communication system comprises a gateway device and the Femto Access Point;
the Femto Access Point is caused to configure virtual RNC means together with the gateway device, the virtual RNC means being recognized as an RNC by the RNC when communication with the RNC is performed; and
if hand over is performed between the BTS and the Femto Access Point, the Femto Access Point as the virtual RNC means is caused to execute a procedure for transmitting and receiving a message containing hand over information for call control to and from the RNC.

24. The program for the Femto Access Point according to claim 23, wherein
if the hand over is performed between the BTS and the Femto Access Point, in the transmission and the reception of the hand over information, data in accordance with a predefined protocol of an IMS network is included into an IP packet, and thereby the message of the hand over information is transmitted and received to and from the gateway device.
